# EUROPEAN PATENT APPLICATION

(11) **EP 3 062 296 A1**
(43) Date of publication of application: **31.08.2016**
(21) Application number: 16154618.9
(22) Date of filing: 08.02.2016
(51) Int. Cl.: G07G 5/00, G07G 1/00

(54) **A PRINTER-DRAWER INTEGRATED APPARATUS AND A POINT OF SALE SYSTEM**

(30) Priority: 27.02.2015 JP 2015039657
(71) Applicant: STAR MICRONICS CO., LTD., Suruga-ku, Shizuoka-shi, Shizuoka 422-8654 (JP)
(72) Inventor: SHINMURA, Kazumitsu, Shizuoka-shi, Shizuoka 422-8654 (JP); WATANABE, Mitsuhiro, Shizuoka-shi, Shizuoka 422-8654 (JP)
(74) Representative: advotec.

(57) **Abstract**

A printer-drawer integrated apparatus in which a printer and a drawer are housed in a common housing and a POS system in which the printer-drawer integrated apparatus and a terminal device having an accounting function are incorporated. According to this POS system, the cost is saved and the installing space is reduced. The printer-drawer integrated apparatus comprises a drawer which has a money storage unit and is enclosed in a housing in a state disallowing money to be taken in and out from the money storage unit, a drawer mechanism changing the drawer into a state allowing money to be taken in and out from the money storage unit, a terminal communication unit receiving a transaction information transmitted from a terminal device having an accounting function, a printer housed in the housing, and a controller controlling the printer to execute a printing in accordance with the transaction information received by the terminal communication unit.

## Description

### CROSS-REFERENCE TO RELATED APPLICATION

This application claims priority of Japanese Patent Application No. 2015-039657 filed on February 27, 2015. The contents of this application are incorporated herein by reference in their entirety.

### BACKGROUND

### (a) Technical Field

This invention relates to a printer-drawer integrated apparatus in which a printer and a drawer are housed in a common housing and a point of sale system in which the printer-drawer integrated apparatus and a terminal device having an accounting function are integrated.

### (b) Description of the Related Art

A system in which a Point of Sale (hereinafter "POS") terminal, a printer and a cash drawer are linked through various interfaces or a system in which a POS resister in which a POS terminal, a printer and a cash drawer are integrated and a server installed inside or outside of a store are connected through a network (for example, please refer to Japanese patent application publications No. 2004-318724 and No. 2006-243822) is generally known as a conventional POS system. In these POS systems, the POS terminal or the printer generates image data of a receipt based on the accounting data generated from the POS terminal and the printer prints out the image data on a paper to issue a receipt. The cash drawer has a drawer having a money storage unit. The drawer is enclosed in a housing in a state disallowing money to be taken in and out from the money storage unit. The drawer is opened by a driving signal received directly or via the printer in accordance with a drawer open command from the POS terminal, thus allowing money to be taken in and out from the money storage unit.

### SUMMARY

The integrated POS resister of the conventional POS system is generally expensive and rather large-sized. When the POS terminal, printer, cash drawer are separately installed, a large scale system is required, thereby a large installing space being required. Accordingly, the conventional POS system is not available for a small size store or a private business.

An embodiment of the present invention provides a printer-drawer integrated apparatus and a POS system which only requires a small installing space and a low cost.

A printer-drawer integrated apparatus according to an embodiment of the present invention comprises a drawer which has a money storage unit and is enclosed in a housing in a state disallowing money to be taken in and out from the money storage unit, a drawer mechanism changing the drawer into a state allowing money to be taken in and out from the money storage unit, a terminal communication unit receiving a transaction information transmitted from a terminal device having an accounting function, a printer housed in the housing, and a controller controlling the printer to execute a printing in accordance with the transaction information received by the terminal communication unit.

In the printer-drawer integrated apparatus according to an embodiment of the present invention, the drawer and the printer are enclosed in the common housing. Therefore, the cost is saved and the installing space is reduced.

Here, the state of the drawer allowing money to be taken in and out from the money storage unit may be the state in which the drawer is advanced forward to bring the money storage unit out of the housing or may be the state in which a cover (for example, an upper cover) of the housing is opened to expose the money storage unit without the drawer movement. (hereinafter the same)

The transaction information transmitted from the terminal device may include an accounting information, a payment information or an information which is not directly related to money transaction, such as privilege point information which is given in accordance with a purchasing price. Further, the transaction information may include a printing information which is used for the printer printing a paper representing a transaction content (for example, a receipt). In detail, the transaction information may include an image information of a receipt or a receipt constituent information (for example, text data representing accounting information, data for designating font or size of a character, logo data of the store, data representing a length of a receipt). The transaction information may be transmitted from the terminal device as a command information, (hereinafter the same)

Further, the printer may print the image. (hereinafter the same)

Further, the controller may include a transaction record data generating unit which generates printing data of the transaction record in accordance with the transaction information received by the terminal communication unit. (hereinafter the same)

A printer-drawer integrated apparatus according to an embodiment of the present invention may comprise a transmission unit which transmits an information based on the transaction information received by the terminal communication unit to a server.

According to this feature, the transaction information may be administrated by the server. The store is thereby allowed to deal with a customer who does not want a receipt or who wants electronic data of purchasing history.

The server may be built by a cloud computing.

Further, the information based on the transaction information received by the terminal communication unit may be the transaction information itself transmitted from the terminal device (unprocessed transaction information) or printing data of the transaction record for the receipt. Further, the information based on the transaction information received by the terminal communication unit may be an information further including an additional information representing actual payment (by cash or credit card) or state change information changing the drawer into the state allowing money to be taken in and out from the money storage unit (drawer open information).

A printer-drawer integrated apparatus according to an embodiment of the present invention may comprise an interface for connecting an external device.

Because of the portability, the terminal device is restricted in employing an interface for connecting to an external device in variety and number. Therefore, the terminal device is not suitable for connecting to various external devices. In the meantime, the printer-drawer integrated apparatus may more easily accept an interface for connecting various external devices than the terminal device. Therefore, the printer-drawer integrated apparatus may be easily ready for system extension.

In a printer-drawer integrated apparatus according to an embodiment of the present invention, the controller may receive an external information from an external device connected to the interface and the terminal communication unit may transmit the external information received by the controller to the terminal device.

This way, the terminal device is free from acquiring an external information by connecting to an external device and transmitting the external information to the printer-drawer integrated apparatus. Therefore, burden of the terminal device is lightened.

In a printer-drawer integrated apparatus according to an embodiment of the present invention, the controller may be pre-installed with a control driver of the external device.

In other words, the control driver of the external device may be pre-installed in a firmware of the printer-drawer integrated apparatus. Because the printer-drawer integrated apparatus has rather enough storage capacity compared to the terminal device, a control driver of an external device expected to connect may be easily pre-installed in the printer-drawer integrated apparatus. Since the control driver of the external device is pre-installed in the printer-drawer integrated apparatus, the external device is able to be operated in accordance with a command from the terminal device by merely connecting the external device to the interface.

A POS system according to an embodiment of the present invention comprises a terminal device having an accounting function and transmitting a transaction information, a drawer which has a money storage unit and is enclosed in a housing in a state disallowing money to be taken in and out from the money storage unit, a drawer mechanism changing the drawer into a state allowing money to be taken in and out from the money storage unit, a terminal communication unit receiving a transaction information transmitted from a terminal device, and a printer housed in the housing, a controller controlling the printer to execute a printing in accordance with the transaction information received by the terminal communication unit, wherein the terminal device is a versatile device separated from the housing.

A POS system according to an embodiment of the present invention comprises the printer-drawer integrated apparatus of the present invention and the versatile terminal device. Therefore, the cost may be saved compared to employing an exclusive POS terminal and the installing space may be reduced.

And, POS terminals generally propagated these days are mainly exclusive ones. In this case, to print a transaction information output from the POS terminal by a printer, communication protocol of the POS terminal is required to conform to that of the printer. Therefore, if the POS terminal is configured to be an exclusive device adapted to transmit and receive data in compliance with the particular protocol of the printer, the system may be easily configured. A terminal device of the POS system according to an embodiment of the present invention may be installed with, for example, an application software for POS, an application software for accounting or an interface software to establish communication in compliance with the particular communication protocol of the printer. A terminal device of the POS system according to an embodiment of the present invention may be installed with an application software for POS or an application software for accounting which have a function to establish communication in compliance with the particular communication protocol of the printer.

Here, the terminal device is a versatile device having at least an application software for POS or an application software for accounting installed and further having another application software for a completely different use installed.

Further, the accounting function may be a POS function. In detail, the accounting function may include a function to collect information regarding sold time, sold goods, sold price, and sold amount or regarding payment type (cash, electronic money such as a credit card and contactless IC card).

When a printer-drawer integrated apparatus and a POS system according to an embodiment of the present invention are applied, the cost is saved and the installing space is reduced.

### BRIEF DESCRIPTION OF THE DRAWINGS

FIG. 1 is a perspective view of a POS system PS according to an embodiment of the present invention.
FIG. 2 shows a communication network system in which the POS system of FIG. 1 is incorporated.
FIG. 3 shows a display screen of a POS versatile terminal shown in FIG. 1, on which a GUI image of a POS application software is displayed.
FIG. 4 is a function block diagram of the printer-drawer integrated apparatus shown in FIG. 1.
FIG. 5 is a perspective view of the printer-drawer integrated apparatus of which upper plate, left plate, right plate, and rear plate are removed to show an inner structure of the printer-drawer integrated apparatus shown from right-rear side.
FIG. 6 is a bottom view of the printer-drawer integrated apparatus.
FIG. 7 is a cross-sectional view taken along line X-X' of the printer-drawer integrated apparatus of FIG. 5.
FIG. 8A is a perspective view of the printer-drawer integrated apparatus shown in FIG. 1 of which drawer is detached.
FIG. 8B is an enlarged view of the circle portion C1 of FIG. 8A, showing a rail engaging member and its periphery.
FIG. 9A is a rear side view of the drawer.
FIG. 9B is an enlarged view of the ellipse portion C2 of FIG. 9A, showing the rail engaging member and a lower side portion of an arm on which the rail engaging member is mounted.
FIG. 10A is a perspective view of a base part and the drawer at the enclosed position.
FIG. 10B is a cross-sectional view taken along line Y-Y' of FIG. 10A, showing a drawer side base part and the drawer mounted on the drawer side base part.
FIG. 11A, FIG. 11B and FIG. 11C show the drawer and a drawer device to which the drawer is attached.
FIG. 12A is a perspective view of the printer-drawer integrated apparatus shown from right-upper side, of which drawer is detached.
FIG. 12B is an enlarged view of the circle portion C3 of FIG. 12A, showing a restrictor and its periphery.
FIG. 12C is a plan view of the restrictor.
FIG. 13A is a plan view of the drawer at an opened position.
FIG. 13B is a plan view of the drawer at the enclosed position.
FIG. 14A is a partial plan view of the restrictor directed in one orientation to adjust the position of the drawer in a width direction.
FIG. 14B is a partial plan view of the restrictor directed in another orientation to adjust the position of the drawer in a width direction.
FIG. 14C is a partial plan view of the restrictor directed in another orientation to adjust the position of the drawer in a width direction
FIG. 15A-1, FIG. 15A-2, FIG. 15A-3, FIG. 15B-1, FIG. 15B-2 and FIG. 15B-3 show movement of the drawer brought into the enclosed position.

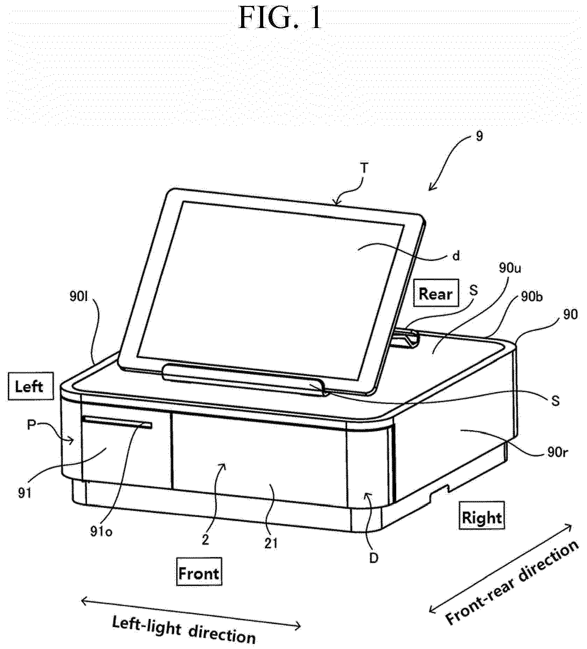

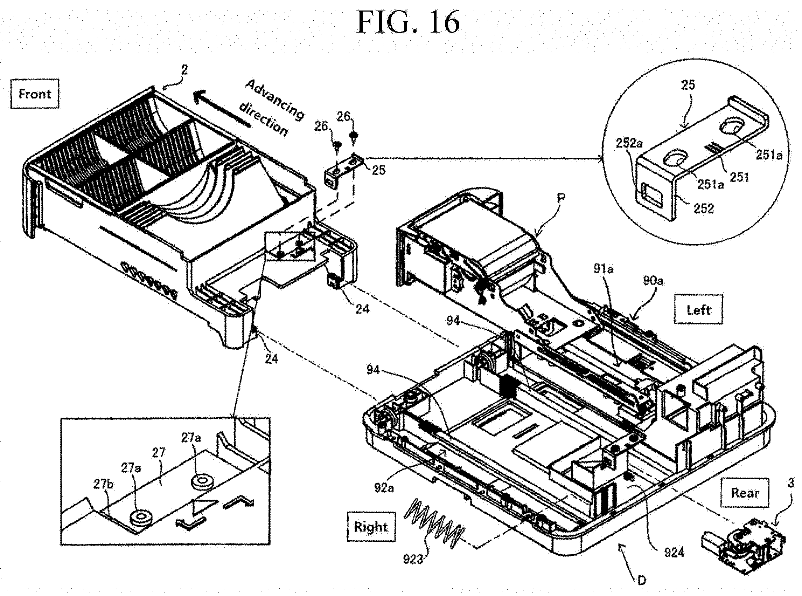

FIG. 16 is an exploded view of the printer-drawer integrated apparatus shown in FIG. 1.

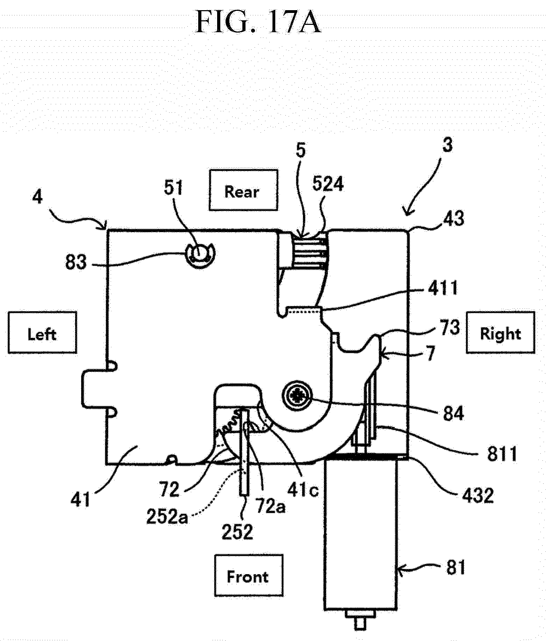

FIG. 17A is a plan view of a lock unit shown in FIG. 16.

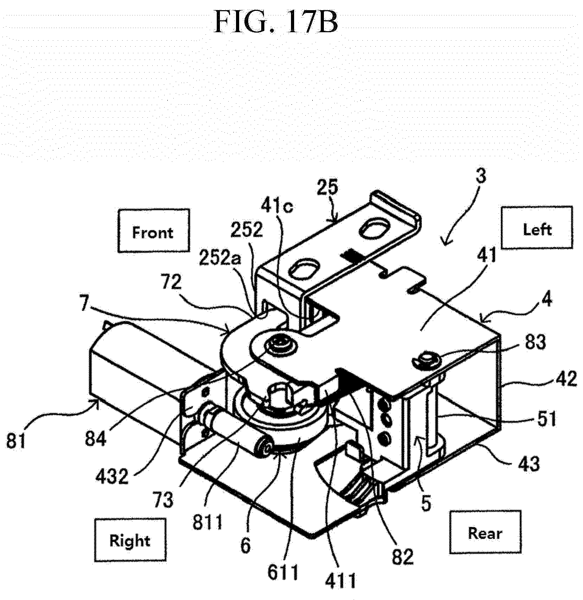

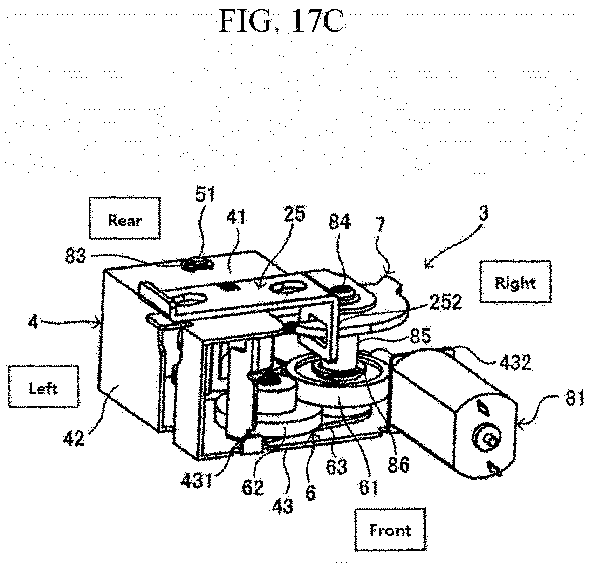

FIG. 17B and FIG. 17C are perspective views of the lock unit shown in FIG. 17A.

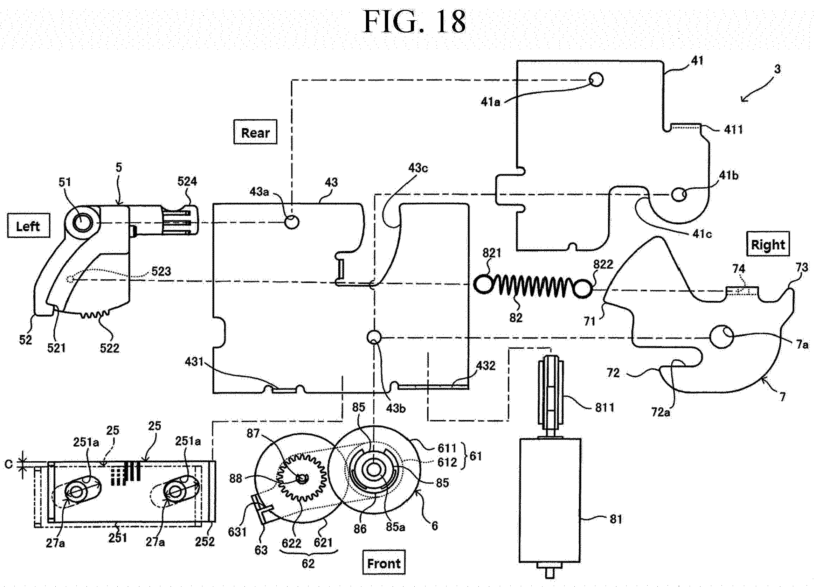

FIG. 18 is an exploded view of the lock unit shown in FIGS. 17A, 17B and 17C.
FIG. 19A-1, FIG. 19A-2, FIG. 19A-3, FIG. 19B-1, FIG. 19B-2 and FIG. 19B-3 show an unlocking procedure of the lock unit in step by step.

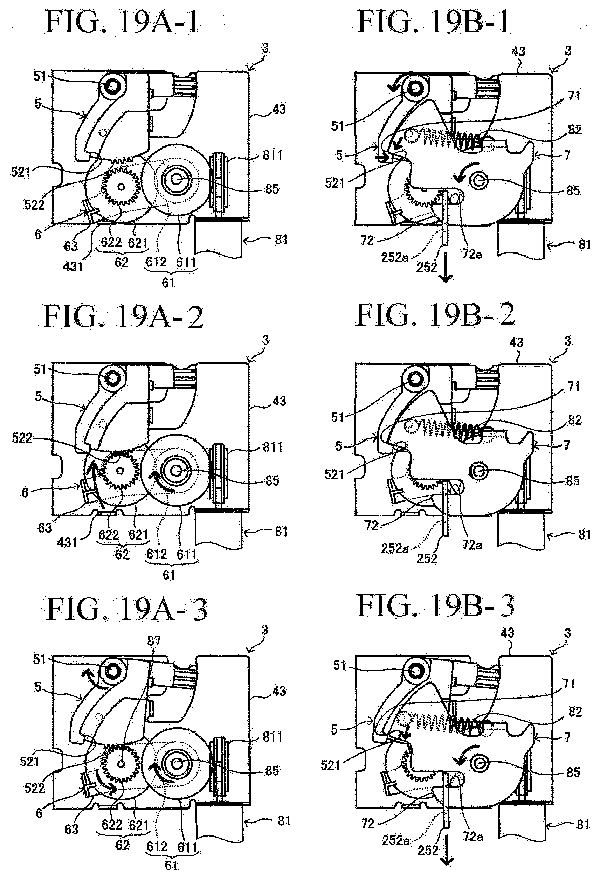

FIG. 20A-4, FIG. 20A-5, FIG. 20B-4, FIG. 20B-5 and FIG. 20C-5 show the unlocking procedure of the lock unit continued from FIG. 19.
FIG. 21C-1, FIG. 21C-2, FIG. 21D-1 and FIG. 21D-2 show a state of the lock unit shown in
FIG. 19, in which a drawer kick signal is output when the drawer is physically blocked from advancing.

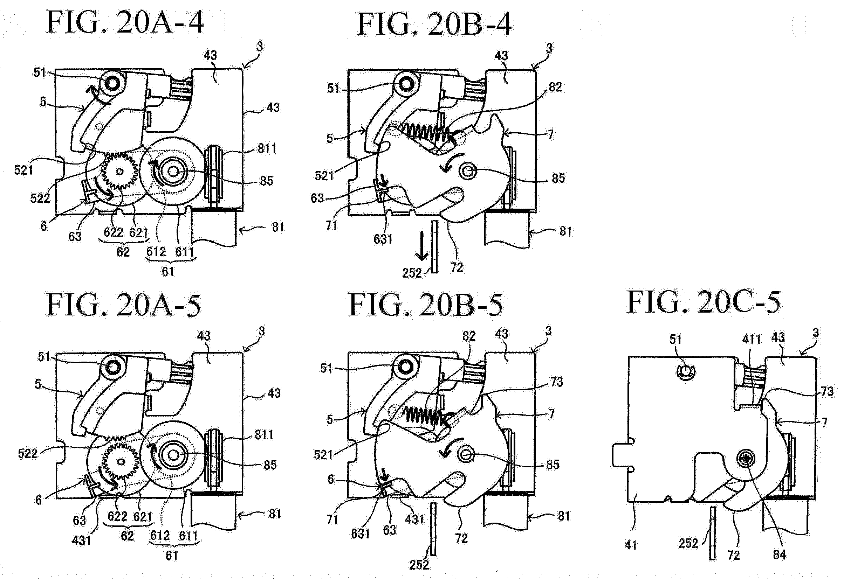

FIG. 22E-1 and FIG. 22E-2 show a returning procedure of the lock unit from the state shown in FIG. 20B-5 in which a lock frame is disposed at an initial position to the state shown in
FIG. 19B-1 in which the lock unit is locked by pressing the drawer back to the enclosed position.

### DETAILED DESCRIPTION

Advantages and features of the present invention and methods to achieve them will be elucidated from exemplary embodiments described below in detail with reference to the accompanying drawings. However, the present invention is not limited to exemplary embodiment disclosed herein but may be implemented in various forms. The exemplary embodiments are provided by way of example only so that a person of ordinary skill in the art can fully understand the disclosures of the present invention and the scope of the present invention. Therefore, the present invention will be defined only by the scope of the appended claims.

Hereinafter, an embodiment of the present invention will be described with reference to the accompanying drawings. In the following description, the same components are denoted by the same reference numerals and signs, and the description thereof will be omitted or simplified.

FIG. 1 is a perspective view of a POS system PS according to an embodiment of the present invention. The POS system PS comprises a POS versatile terminal T and a printer-drawer integrated apparatus 9 according to the present invention. The POS versatile terminal T is, for example, iPad (Registered trademark) of Apple Inc., Nexus 7 (Registered trademark) of Google Inc. or Surface (Registered trademark) of Microsoft Inc. In other words, The POS versatile terminal T is a tablet terminal operated by various operating systems such as iOS (Registered trademark), Android (Registered trademark), Windows (Registered trademark) or Linux (Registered trademark). The POS versatile terminal T has extensive versatility regardless of the sort of installable software. For example, regardless of the operating system, the POS versatile terminal T may have various application softwares installed for extensive functions. The POS versatile terminal T may be a smart phone which is smaller than the tablet terminal device.

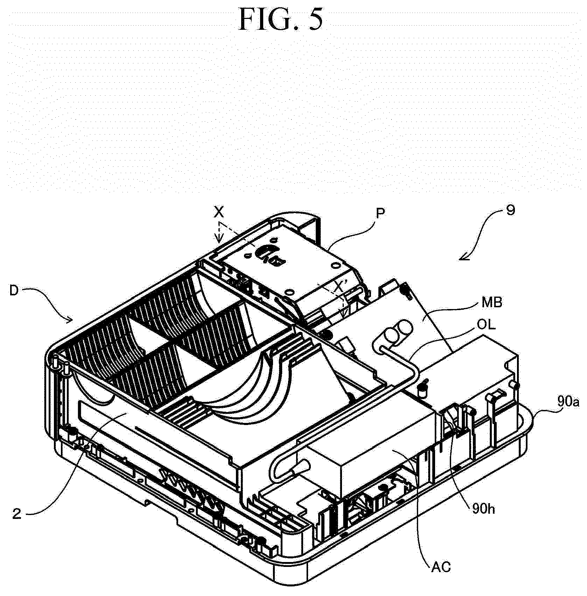

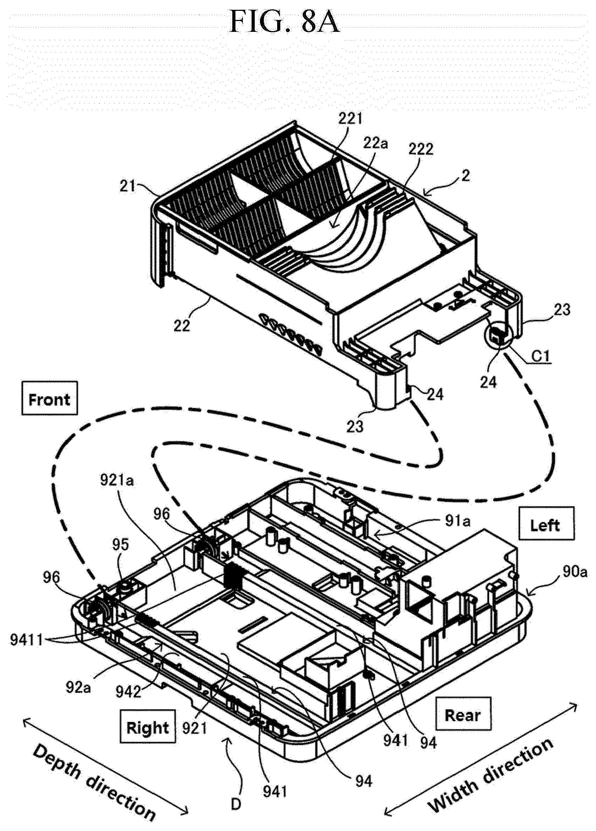

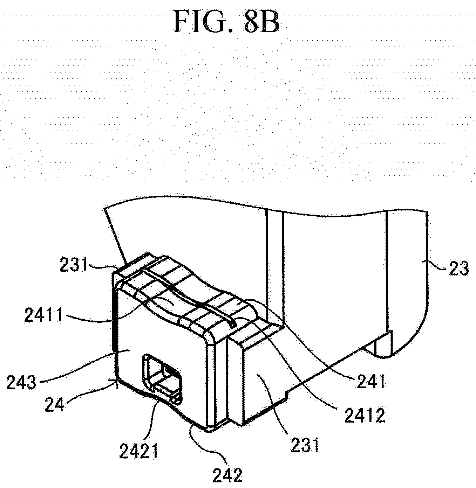

The printer-drawer integrated apparatus 9 comprises a printer P and a cash drawer D housed in a common housing 90. The housing 90 includes an upper plate 90u, a left plate 901, a right plate 90r, a rear plate 90b, and a base part 90a (referring to FIG. 5 or FIG. 8), having the overall shape of a rectangular parallelepiped with rounded corners. The printer-drawer integrated apparatus 9 and the POS versatile terminal T may be connected through a wireless communication. The wireless communication may be under the standard of Bluetooth (Registered trademark). A wired communication may be applied instead of the wireless communication. The wireless communication may be under the standard of Wi-Fi (Registered trademark) or infrared-ray communication. Further, the printer-drawer integrated apparatus 9 and the POS versatile terminal T may be connected through a USB cable. The POS versatile terminal T may be supplied with electric power from the printer-drawer integrated apparatus 9 through the USB cable or the printer-drawer integrated apparatus 9 may be supplied with electric power from the POS versatile terminal T through the USB cable. The printer-drawer integrated apparatus 9 may be supplied with electric power from a commercial power source and the POS versatile terminal T may be supplied with electric power from a battery internally mounted. Accordingly, the POS versatile terminal T may be operated by electric power supplied from the commercial power source through the printer-drawer integrated apparatus 9 or the battery of the POS versatile terminal T may be charged with the electric power supplied from the commercial power source through the printer-drawer integrated apparatus 9. Further, in a case that a commercial power source is unavailable, the printer-drawer integrated apparatus 9 may be operated by the electric power supplied from the battery mounted on the POS versatile terminal T. The printer-drawer integrated apparatus 9 may have a battery mounted on itself.

The printer-drawer integrated apparatus 9 is adapted to issue a transaction record paper such as a receipt and to store money to be taken in and out in accordance with accounting processing performed by the POS versatile terminal T. The printer-drawer integrated apparatus 9 comprises the printer P housed in the housing 90 and the cash drawer D having a drawer 2 enclosed at a predetermined position of the housing 90. The printer P and the cash drawer D are disposed in a transverse direction (left-right direction). A printer cover 91 having a paper outlet 91o is disposed in front of the printer P housed in the housing 90. A transaction record paper such as a receipt is output through the paper outlet 91o. Further, the drawer 2 has a front plate 21 disposed at the front side. The printer cover 91 and the front plate 21 are preferably coplanar in the left-right direction. Therefore, an embodiment of the present invention is provided with a mechanism to adjust the position of the drawer 2 in the front-rear direction, which will be described later. The drawer 2 of the cash drawer D is diagonally moved forward in the lower left direction in FIG. 1. The direction in which the cash drawer D is moved may be referred to as the advancing direction. Further, the lower left side of Fig. 1 is the front side of the printer-drawer integrated apparatus 9 and the upper right side of Fig. 1 is the rear side of the printer-drawer integrated apparatus 9. Hereinafter, the right side of the printer-drawer integrated apparatus 9 viewed from the front side thereof may be referred to as "the right side" and the left side of the printer-drawer integrated apparatus 9 viewed from the front side thereof will be referred to as "the left side." Further, the direction connecting the front side and the rear side may be referred to as "the front-rear direction" and the direction connecting the left side and the right side may be referred to as "the left-right direction."

The upper plate 90u of the housing 90 of the printer-drawer integrated apparatus 9 has a rectangular shape with rounded four corners and a horizontal surface having an area equal to or greater than the area of the POS versatile terminal T. The surface of the upper plate 90u may have enough area since, as described above, the printer P and the cash drawer D are arranged in the transverse direction. As shown in FIG. 1, a stand S is respectively mounted on the upper plate 90u on the front and rear sides thereof. As shown in FIG. 1, the POS versatile terminal T may be diagonally supported by the front stand S to face its display surface d on the front side for an operator standing at the front side. The POS versatile terminal T may be diagonally supported by the rear stand S to face its display surface d on the rear side for an operator standing at the rear side.

The stands S may be removably mounted on the upper plate 90u The upper plate 90u is a horizontal surface having an area equal to or greater than that of the POS versatile terminal T. Therefore, if the stands S are detached from the upper plate 90u, the upper plate 90u provides a mounting surface on which the POS versatile terminal T may be directly placed. In other words, the POS versatile terminal T may be horizontally placed on the upper plate 90u. The upper plate 90u may be an inclined surface toward the front side having a supporting protrusion disposed at the front portion of the upper plate 90u. Further, the upper plate 90u may be lifted from the horizontal surface to the inclined surface. The upper plate 90u may be integrally formed with the stands S.

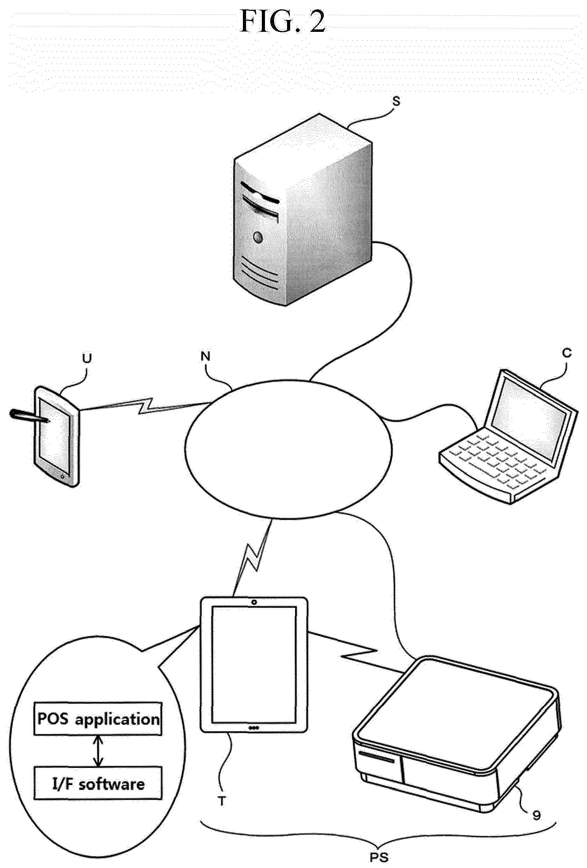

FIG. 2 shows a communication network system in which the POS system of FIG. 1 is incorporated.

The POS system PS of FIG. 1 is connected to a server S through a communication network N. The communication network N may be the internet or any network established by TCP/IP protocol such as LAN (Local Area Network). Accordingly, the POS system PS and the server S may be disposed in an indoor place and may be connected with a LAN cable.

In the server S of FIG. 2, store application software such as a customer managing software and an accounting software for managing sales as well as customer application software such as a purchase history managing software and a privilege point software for managing a privilege point to be given in accordance with a purchase may be installed. A user of the POS versatile terminal T, a personal computer C or a versatile mobile terminal U which are connected to the server S through the communication network N may use the customer application softwares installed in the server S by way of so-called cloud computing service.

Further, in the POS versatile terminal T in FIG. 2, a POS application software and an interface (I/F) software are installed. The POS application software, which will be more specifically described later, is adapted to generate accounting information. The accounting information represents payment information including a name of the purchased goods, price, quantity, and total amount. The accounting information is an example of transaction information. The I/F software is adapted to establish a communication with a printer under a particular communication protocol. The accounting information (transaction information) generated by the POS application software is wirelessly transmitted to the printer-drawer integrated apparatus 9 by the I/F software.

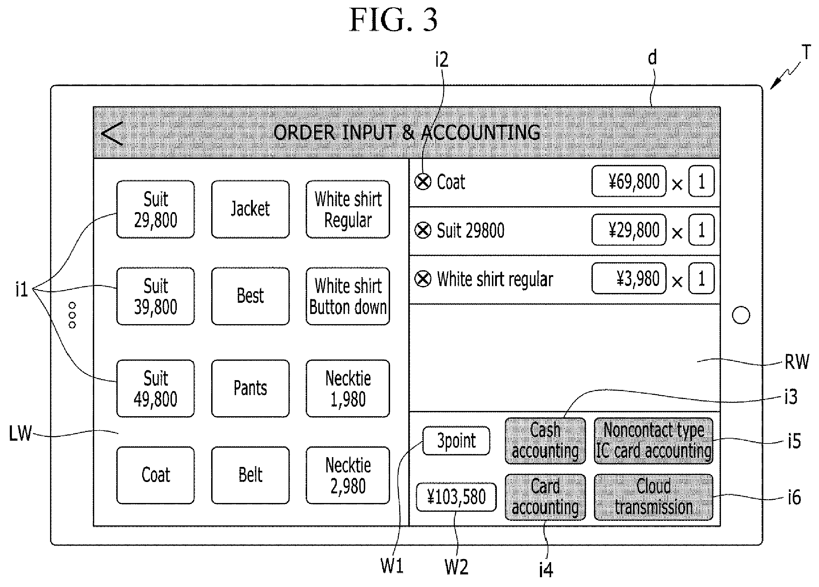

FIG. 3 shows a display screen of the POS versatile terminal shown in FIG. 1, on which a GUI image of the POS application software is displayed.

The POS application software includes an order input and accounting mode, a sales managing mode, a customer managing mode, and a stock mode.

FIG. 3 shows the GUI image of the order input and accounting mode. A left side window LW is an order input window and a right side window RW is an accounting window. When a goods name icon i1 arranged on the left side window LW is tapped, the ordered goods name, price and quantity are horizontally displayed in line and are vertically arranged from up to down in accordance with the ordered sequence. Cancellation of order is available by an X mark icon i2 disposed at the left side of the ordered goods name.

At the lower portion of the right window RW, a total number of goods w1 and total amount w2 are displayed. Further, payment type icons such as a cash accounting icon i3, a credit card accounting icon i4, and a noncontact type IC card accounting icon i5 are displayed. After the order input is completed, if the cash accounting icon i3 or the noncontact type IC card accounting icon i5 is tapped, the accounting information is transmitted to the printer-drawer integrated apparatus 9 and a receipt is printed by the printer P. Further, if the credit card accounting icon i4 is tapped, the accounting information is transmitted to the printer-drawer integrated apparatus 9 and the printer P prints a sales statement having a signature block for the store and a receipt for the card user.

Further, a cloud transmission icon i6 is displayed on the right side window RW. After the order input is completed, if the cloud transmission icon i6 is tapped, the accounting information is not transmitted to the printer-drawer integrated apparatus 9 but, instead, to the server S via the communication network N shown in FIG. 2. The accounting information transmitted to the server S is managed by the plurality of application softwares installed in the server S. Therefore, both the store and the customer may use the accounting information itself and information derived from the accounting information through cloud computing service in any time. For example, the customer may download the accounting information to be displayed on the POS versatile terminal T or the personal computer C in the form of a digital receipt. Further, the store may read, aggregate, or analyze the accounting information in the sales managing mode, the customer managing mode, or the stock managing mode of the POS application software.

Here, it is explained that the accounting information is not transmitted to the printer-drawer integrated apparatus 9 when the cloud transmission icon i6 is tapped. However, the accounting information may be firstly transmitted to the printer-drawer integrated apparatus 9, and then transmitted to the server S via the communication network N shown in FIG. 2 from the printer-drawer integrated apparatus 9. Further, when the cloud transmission icon i6 is tapped, the printer P of the printer-drawer integrated apparatus 9 may be controlled to print a URL information (for example, two-dimensional code) of a webpage of the server S issuing a receipt or to print a password to access the webpage.

As discussed in the above, the POS versatile terminal T having the POS application softwares installed has an accounting function that transmits the accounting information (transaction information). The POS versatile terminal T is a versatile electric device separated from the housing 90 of the printer-drawer integrated apparatus 9 and an example of a terminal device.

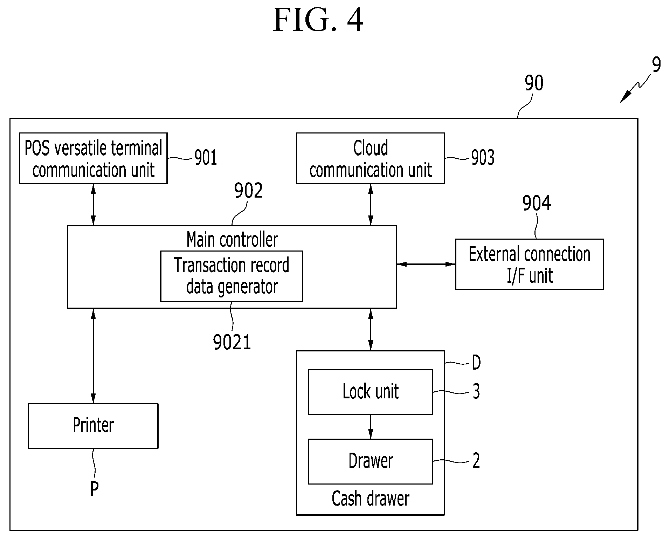

FIG. 4 is a function block diagram of the printer-drawer integrated apparatus shown in FIG. 1.

The printer-drawer integrated apparatus 9 comprises a POS versatile terminal communication unit 901, a main controller 902, a cloud communication unit 903, an external connection I/F unit 904, the printer P, and the cash drawer D. These elements 901 to 904, P, and D are housed in the common housing 90.

The POS versatile terminal communication unit 901, the cloud communication unit 903, and the external connection I/F unit 904 may be partially protruded or exposed from the housing 90 for the purpose of communication.

The POS versatile terminal communication unit 901 plays a role of an I/F unit to communicate with the POS versatile terminal T in compliance with various communication standards such as Bluetooth (registered trade mark). This POS versatile terminal communication unit 901 is an example of terminal communication unit which receives the accounting information transmitted from the POS versatile terminal T. The POS versatile terminal communication unit 901 may communicate with a plurality of POS versatile terminals T but not simultaneously. The POS versatile terminal communication unit 901 communicates with the POS versatile terminals T on one-to-one basis.

The main controller 902 does overall control of the printer-drawer integrated apparatus 9 and has a transaction record data generator 9021. The transaction record data generator 9021 generates printing data of the transaction based on the accounting information sent from the POS versatile terminal received by the POS versatile terminal communication unit 901. For example, the transaction record data generator 9021 generates printing data of a receipt or printing data of a sales statement for card accounting. The printing data is data representing printing contents and may be image data or command data. If it is command data, it may include, for example, text data representing the transaction information, data for designating font or size of a character, logo data of the store, data representing a length of a receipt. The main controller 902 is an example of a controller which controls the printer P to print in accordance with the printing data.

FIG. 5 is a perspective view of the printer-drawer integrated apparatus 9 of which upper plate 90u, left plate 901, right plate 90r, and rear plate 90b of the housing 90 are removed to show an inner structure of the printer-drawer integrated apparatus shown from right-rear side. In FIG. 5, the left-upper side is the front side of the printer-drawer integrated apparatus 9 and the right-lower side is the rear side of the printer-drawer integrated apparatus 9.

A control board MB constituting the main controller 902 is, as shown in FIG. 5, mounted to be slanted to the base part 90a of the housing 90. Further, a power adaptor AC is disposed at a rear portion of the base part 90a. An output cord OL extended from the power adaptor AC is connected to the control board MB. An input cord (not shown) of the power adaptor AC has a plug to be inserted to a socket at the front end. The input cord is connected to the power adaptor AC at its rear end through an opening 90h of the rear plate 90b.

The cloud communication unit 903 is an example of a transmission unit communicating with the server S through the communication network N shown in FIG. 2 in compliance with the TCP/IP protocol. In this embodiment, when the printer P prints a receipt, etc. based on the accounting information, the accounting information or the printing data may be transmitted from the cloud communication unit 903 to the server S. For example, the accounting information itself or the printing data generated by the transaction record data generator 9021 may be transmitted at the time that the main controller 902 processes a driving signal to be sent to a cutting device of the printer P (for example, a cutter command for driving a movable blade), which will be described later in detail. Since the cloud communication unit 903 transmits the accounting information or the printing data to the server S at the time of the payment, the printer-drawer integrated apparatus 9 according to the present embodiment allows a customer to obtain a digital receipt with his (or her) own personal computer or smart phone after shopping in addition to a paper receipt.

Transmission of the accounting information or the printing data may be omitted. Further, such transmission may be selectable by the customer or the store by operating the POS versatile terminal T or a control unit of the printer-drawer integrated apparatus 9.

The external connection I/F unit 904 is a connecting port for such as USB (Universal Serial Bus), LAN, serial communication, etc.

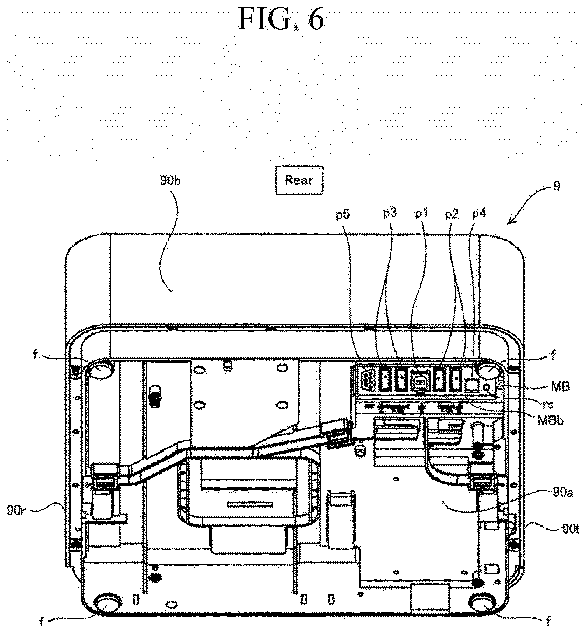

FIG. 6 is a bottom view of the printer-drawer integrated apparatus 9. In FIG. 6, the upper side is the rear side of the printer-drawer integrated apparatus 9. FIG. 6 shows the bottom part, the rear plate 90b, the left plate 901, and the right plate 90r of the printer-drawer integrated apparatus 9. The printer-drawer integrated apparatus 9 has four legs f disposed at the four corners of the bottom part.

As described above with reference to FIG. 5, the control board MB is slantedly mounted with respect to the base part 90a. A bottom portion MBb of the control board MB is exposed toward the bottom part through the base part 90a. The bottom portion MBb is provided with connection ports for USB, LAN, and serial communication. FIG. 6 shows a USB main port p1 and further two USB port p2 and two USB ports p3 disposed on left and right sides of the USB main port p1. The USB main port p1 is used for wired connection to a host computer (not shown) installed in the store. The two USB ports p2 on the left plate 901 side have power supplying function. Therefore, the POS versatile terminal T connected to the USB ports p2 is supplied with electric power from a commercial power source. A LAN port p4 is disposed at the left side of the USB ports p2. Further, a reset switch rs for resetting the wireless communication under the standard of Bluetooth (Registered trademark) is disposed beside the LAN port p4. When the printer-drawer integrated apparatus 9 is connected to the POS versatile terminal T or the communication network N shown in FIG 2 with a LAN cable, the LAN port p4 acts as the POS versatile terminal communication unit 901 or the cloud communication unit 903. And the printer-drawer integrated apparatus 9 according to this embodiment is provided with an antenna (not shown) for wireless connection with the POS versatile terminal T and the communication network N shown in FIG. 2 A serial port p5 conforming to the RS-232C standard is disposed at the right side of the two USB port p3 which is disposed at the right side of the USB main port p1. These ports p1 to p5 and reset switch rs are slantedly mounted to the control board MB. By lifting the bottom part of the printer-drawer integrated apparatus 9, the operator is allowed to easily access the ports and the switch.

To the external connection I/F unit 904 shown in FIG. 4, a peripheral device such as a customer display and an external device such as a bar code reader, a credit card reader, a read and write device of a noncontact type IC card may be connected. The bar code information read by the bar code reader or the magnetic information read by the credit card reader are examples of external information.

The external device connected to the external connection I/F unit 904 is controlled by the main controller 902 to control the POS versatile terminal communication unit 901 for transmission of the external information to the POS versatile terminal T. This transmission from the printer-drawer integrated apparatus 9 to the POS versatile terminal T is particularly useful when the POS versatile terminal T is a smart phone, etc. In other words, it may be preferable that the external connection I/F unit 904 has more versatile application than the external connection I/F of the POS versatile terminal T.

In general, in a portable device such as a smart phone or a tablet terminal, system expansion by an external device is difficult since the external connection I/F of the portable device is limited in variety and number. However, in the printer-drawer integrated apparatus 9 according to an embodiment, system expansion by an external device is easily available since the connecting ports for USB, LAN, and serial communication are mounted on the control board MB. In detail, when an external device is connected to the POS versatile terminal T, the connected external device is handled by the POS application software installed in the POS versatile terminal T. In other words, a particular command for operating the external device is required to be sent from a CPU of the POS versatile terminal T depending on the external device. Further, when the printer P or the cash drawer D are operated based on external information obtained by the external device, the POS versatile terminal T is required to transform the obtained external information into a form of a command which is able to be processed by the printer P or the cash drawer D. If the POS application software does not perform this process, particular driver software for the external device is required to be installed in the POS versatile terminal T. In comparison, the printer-drawer integrated apparatus 9 may be configured to have relevant driver softwares for potential external devices previously installed in a firmware of the main controller 902, and any external device connected to the printer-drawer integrated apparatus 9 may be controlled by the POS versatile terminal T via the main controller 902 of the printer-drawer integrated apparatus 9. In this configuration, the POS application software installed in the POS versatile terminal T is only required to transmit a command for the printer-drawer integrated apparatus 9 to operate the external device whether any external device is connected. Upon receipt of a command, the printer-drawer integrated apparatus 9 uses the relevant driver software to generate a command for the connected external device and then transmits the generated command to the external device to operate it.

Further, information obtained from the external devices (operation result, various status), if necessary, may be processed into a format for the POS versatile terminal T by the main controller 902 of the printer-drawer integrated apparatus 9 and transmitted to the POS versatile terminal T. Accordingly, the POS application software installed in the POS versatile terminal T is not required to perform any particular process depending on the connected external device to operate the external device or to receive information from the external device. Therefore, it is easy to develop the POS application software and burden of the system bender is lessened. Further, it is not necessary to install the driver softwares for the external devices in the POS versatile terminal T.

Further, in a case that the bar code reader or the card reader is connected as the external device, the main controller 902 of the printer-drawer integrated apparatus 9 may be configured to judge the reading result and automatically retry the reading if the result is unsuccessful. In this configuration, since the printer-drawer integrated apparatus 9 is configured to always transmit a successful reading result, the POS versatile terminal T may securely obtain the information without any retrying operation.

Further, the POS versatile terminal T may obtain various status information of the printer P or the cash drawer D from the printer-drawer integrated apparatus 9. The status information may include maintenance information or error information including driving system errors such as print error, cutter error, and drawer open error or control system errors such as data access error, power voltage error, and sensor error. Like the processing with respect to the external device, the status information is also transmitted to the POS versatile terminal T via the main controller 902. The POS versatile terminal T may obtain the various status information of the printer-drawer integrated apparatus 9 with the application software installed in the POS versatile terminal T without executing special processing to obtain the status information.

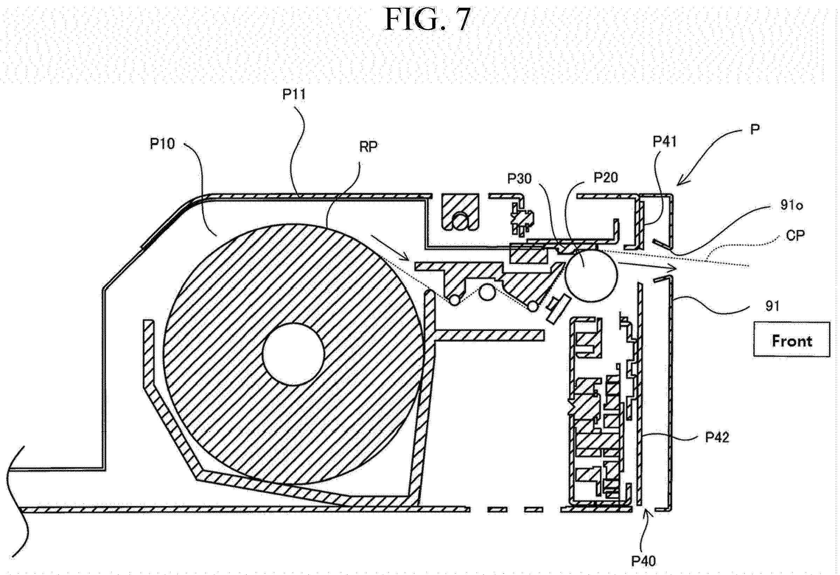

FIG. 7 is a cross-sectional view taken along line X-X' of the printer-drawer integrated apparatus of FIG. 5. That is, FIG. 7 is the cross-sectional view of the printer P. In FIG. 7, the right side is the front side of the printer-drawer integrated apparatus 9.

A rolled paper RP is stored in a paper container P10 of the printer P, which is covered by a paper cover P11. The printer cover 91 has the paper outlet 91o and the path connecting the paper container P10 and the paper outlet 91o constitutes a paper conveyance path. In FIG. 7, the paper CP pulled out from the paper container P10 moves along the paper conveyance path as illustrated in dotted line. Further, the conveyance direction is illustrated by arrow mark.

The printer P has a platen roller P20, a thermal head P30 and a cutting device P40. The platen roller P20 is an example of a conveyance unit. The thermal head P30 is an example of a printing unit. The platen roller P20 is extended in the paper width direction (vertical direction to the paper surface of FIG. 7) and is rotated by a motor not shown. This platen roller P20 is mounted facing the paper conveyance path to hold the back side of the paper as moving toward the paper outlet 91o. The thermal head P30 is also mounted facing the paper conveyance path and extended in the paper width direction. The thermal head P30 is disposed at the front side of the paper which is pulled out from the paper container P10 and discharged from the paper outlet 91o. The platen roller P20 is urged toward the thermal head P30 and the paper CP is conveyed by being sandwiched between the thermal head P30 and the platen roller P20. In other words, when the platen roller P20 with which the back surface of the paper is engaged is rotated, the paper CP is pulled out from the rolled paper RP and conveyed along the paper conveyance path. The thermal head P30 has a plurality of heating elements arranged in the paper width direction. The main controller 902 selectively activates the heating elements according to printing data to allow printing on the paper at portions where the activated heating elements contact. The cutting device P40 has a fixed blade P41 and a movable blade P42. The movable blade P42 moves back and force toward the fixed blade P41. The paper CP interposed between the fixed blade P41 and the movable blade P42 is cut at right in front of the paper outlet 91o in the paper width direction.

As shown in FIG. 7, the discharging direction of the paper is approximately horizontal toward the front side. The advancing direction (drawn direction) of the drawer 2 is also directed toward the front side. The advancing direction of the drawer 2 is the same as the discharging direction of the paper, achieving a smooth operation.

The cash drawer D will be described in detail later. The cash drawer D according to an embodiment has the drawer 2 and a lock unit 3. The drawer 2 has a money storage unit which may be enclosed in the housing 90 not to allow taking money in and out. The lock unit 3 is an example of a drawer mechanism and changes the drawer 2 from the drawer closed state to an accounting state (drawer opened state) to allow taking money in and out from the money storage unit. The main controller 902 may output a drawer kick signal to the lock unit 3 after the cutting device P40 of the printer P cuts the paper to complete one payment. For example, the drawer kick signal may be output to the lock unit 3 after a driving signal for the cutting device (for example, a cutter command) is transmitted to the printer P. When the drawer kick signal is output to the lock unit 3, the drawer 2 is advanced to an opened position from an enclosed position in the housing 90. The drawer 2 is changed from the closed state to the accounting state (drawer opened state).

In this embodiment, the drawer kick signal is output after the printer P finishes the printing. However, the drawer kick signal may be output before starting of the printing or at the same time with the starting of the printing. Further, the POS application software of the POS versatile terminal T may be set to output the drawer kick signal through the main controller 902 or the POS application software may be banned to output the drawer kick signal.

Further, in the cash drawer D of this embodiment, the drawer 2 itself is advanced into the opened state. However, the drawer 2 may be changed to the accounting state (drawer opened state) without advancing but by opening a top cover.

As described above, since the printer-drawer integrated apparatus 9 according to an embodiment of the present invention has the printer P and the cash drawer D housed in one housing 90, it is possible to provide a POS device compact and cheap. Further, if the printer P and the cash drawer D are separately provided, the printer P and the cash drawer D are required to be connected with a wire such as a cable. In this case, communication error may occur due to cable disconnection, cable damage or contact error of a connector, etc. However, according to the embodiment of the present invention, since the printer P and the cash drawer D are housed in one housing 90, a cable and a connecting unit connecting between the printer P and the cash drawer D are not exposed to outside, thereby occurrence frequency of communication error being reduced. Further, the apparatus according the embodiment is more compact than the apparatus in which the printer P and the cash drawer D are separately provided but is bigger than a separate cash drawer D by at least the size of a separate printer P. Therefore, the apparatus according the embodiment is difficult to be stolen compared to the separate cash drawer D.

According to the embodiment, issuing the paper receipt by the printer P, opening the drawer, and storing the digital receipt in the server S (cloud storing) are executed as a series of transactions. Specifically, such accounting process at the POS versatile terminal T is finished by tapping the accounting icons i3 to i5 or the cloud transmission icon i6 shown in FIG. 3. When the accounting process is finished, issuing the paper receipt by the printer P, opening the drawer, and storing the digital receipt in the server S are automatically executed, thereby enhancing convenience.

The POS versatile terminal T of the POS system PS according to the embodiment is in compliance with a general communication method such as Bluetooth (registered trade mark) and also provided with the I/F software adapted to establish communication with the printer in compliance with the particular communication protocol. By installing this kind of I/F software, a general-purpose device may be applied as the POS terminal regardless of the kind of the operating system such as iOS (registered trade mark), Android (registered trade mark) or Windows (registered trade mark).

The cloud communication unit 903 may, in addition to the accounting information or the printing data, further transmit to the server S payment information (cash or credit card) or drawer information showing that the cash drawer D is changed from the closed state to the accounting state (drawer opened state).

Further, when the accounting icon i4 for the credit card is tapped, the main controller 902 may be configured not to output the drawer kick signal since there is no need to take money in and out from the drawer 2 for card accounting. Such configuration is especially preferable when the payment is done by the user input of password instead of signature. Meanwhile, the main controller 902 may be configured to output the drawer kick signal when the signed statement is supposed to be stored in the money storage unit of the drawer 2.

From now, the cash drawer D will be described in detail. The cash drawer D according to the present embodiment has two features. First, operator's hands are prevented from getting dirty when the drawer 2 is attached to or detached from the housing 90. Second, locking and unlocking the drawer 2 is available without performing position control or motor shutdown control. The former will be described.

FIG. 8A is a perspective view of the printer-drawer integrated apparatus 9 shown in FIG. 1 of which drawer 2 is detached. In FIG. 8A, the printer is not illustrated and only the base part 90a is illustrated for clearly showing the inner structure of the housing 90. Further, FIG. 8A is a drawing viewed from right-rear side of the printer-drawer integrated apparatus 9. Accordingly, the left-upper side of the drawing is the front side of the apparatus 9 and the right-lower side of the drawing is the rear side of the apparatus 9

As shown in FIG. 8A, the drawer 2 includes a drawer main body 22 on which the front panel 21 is fixed, a pair of arms 23 extended from the main body 22 toward the rear side, and a pair of rail engaging members 24 mounted on the arms 23. The drawer main body 22 has a money storage unit 22a for storing money, etc. The money storage unit 22a has a removable money tray 221 and a plurality of partitions 222. The pair of arms 23 are arranged spaced apart in the width direction and the rail engaging members 24 are respectively mounted on the side surfaces of the arms 23 facing each other. The rail engaging members 24 will be described later in detail.

The base part 90a includes a printer side base part 91a and a drawer side base part 92a. On the printer side base part 91a, a printer which is not illustrated is disposed. On the drawer side base part 92a, a pair of guide rails 94 are mounted. The pair of guide rails 94 are arranged spaced apart in the width direction corresponding to the pair of rail engaging members 24 and extended in the depth direction. On the front part of the drawer side base part 92a, a pair of guide rollers 96 are arranged spaced apart in the width direction and a restrictor 95 is mounted between the pair of guide rollers 96. The pair of guide rollers 96 support and guide the drawer 2 when it is attached or detached. The restrictor 95 restricts the position of the drawer 2 in the width direction. The detailed function of the pair of guide rollers 96 and the restrictor 95 will be described later. And, on the rear part of the drawer side base part 92a, a lock unit (not shown here) is mounted. On the rear part of the drawer 2, an engaging member (not shown here) which is adapted to be engaged with the lock unit is fixed. The drawer 2 is anchored at the enclosed position by engagement of the lock unit and the engaging member.

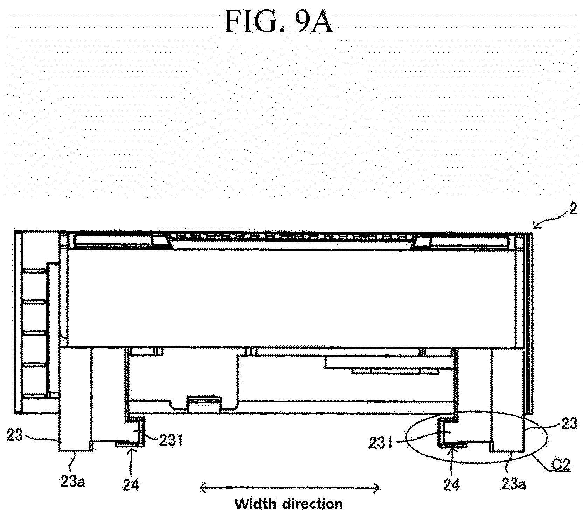

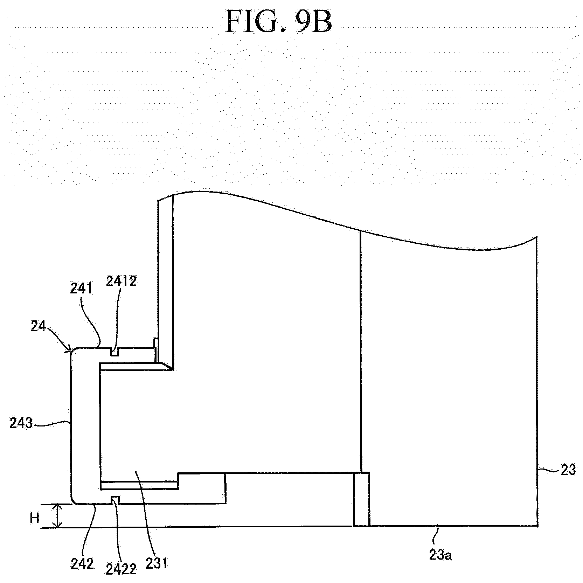

With reference to FIG. 8B, FIG. 9A and FIG. 9B, the structure of the rail engaging members 24 and the mounting structure of the rail engaging members 24 on the arm 23 will be described. FIG. 8B is an enlarged view of the circle portion C1 of FIG. 8A, showing the rail engaging member 24 and its periphery. FIG. 9A is a rear side view of the drawer 2. FIG. 9B is an enlarged view of the ellipse portion C2 of FIG. 9A, showing the rail engaging member 24 and a lower side portion of the arm 23 on which the rail engaging member 24 is mounted.

As shown in FIG. 9A, the pair of arms 23 respectively have a pair of supporting pieces 231 protruding inward in the width direction at the lower side portion thereof. The pair of supporting pieces 231, as shown in FIG. 8B, are arranged spaced apart in the depth direction, between which the rail engaging members 24 are fixed. Accordingly, as shown in FIG. 9A, the pair of rail engaging members 24 are arranged opposite each other directed inward in the width direction.

As shown in FIG. 8B and FIG. 9B, the rail engaging member 24 has an upper contact part 241 formed at the upper end, a lower contact part 242 formed at the lower end, and a lateral part 243 connecting the upper contact part 241 and the lower contact part 242 at the inner side in the width direction. The upper contact part 241 and the lower contact part 242, as detailedly described later, are portions contacting with the guide rail 94 shown in FIG. 8 and on which a lubricant such as grease is coated. As shown in FIG. 8B, the upper contact part 241 has a grease trench 2411 recessed downward formed at a middle part in the depth direction and the lower contact part 242 has a grease trench 2421 recessed upward formed at a middle part in the depth direction. Further, the upper contact part 241 has a grease channel 2412 extending toward the depth direction and, as shown in FIG. 9B, the lower contact part 242 has a grease channel 2422 extending in the depth direction. The grease trenches 2411, 2421 and the grease channels 2412, 2422 constitute grease containers for coated grease. Since the pair of rail engaging members 24 are arranged opposite each other directed inward in the width direction, it is unlikely for the user attaching or detaching the drawer 2 to touch the upper contact part 241 and the lower contact part 242 having coated grease collected in the grease containers. Since unexpected touching of the upper contact part 241 or the lower contact part 242 is prevented, the user's hands are prevented from getting dirty with grease. The grease container may be configured by only one of the grease trenches 2411, 2421 and the grease channels 2412, 2422. Further, the grease container may be provided on only one of the upper contact part 241 and the lower contact part 242. Further, the lateral part 243 of the rail accepter 24 may be designed as a contact part contacting with a wall part 943 of the guide rail 94 where coated grease is collected.

As shown in FIG. 9A, a lower end 23a of the arm 23 is the lowest portion of the drawer 2. As shown in FIG. 9B, the lower contact part 242 of the rail engaging member 24 is positioned higher than the lower end 23a of the arm 23 by the height H. Therefore, when the drawer 2 is put in a safe or placed on a floor, the contact part barely contacts a surface of the safe or the floor. Accordingly, the surface of the safe or the floor is prevented from being stained by grease coated on the contact part.

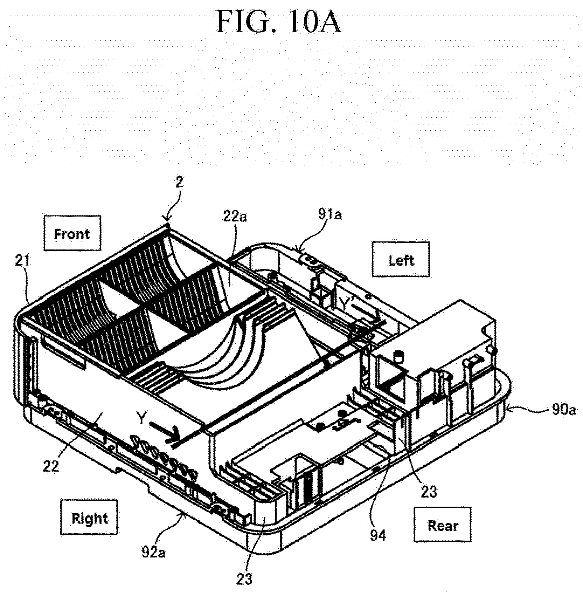

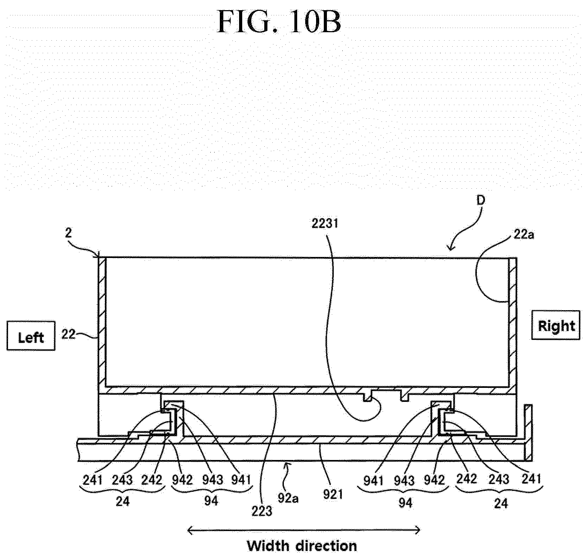

With reference to FIG. 10A and FIG. 10B, the state of the guide rail 94 and the rail engaging member 24 will be described when the drawer 2 is at the enclosed position. FIG. 10A is a perspective view of the base part and the drawer at the enclosed position. FIG. 10B is a cross-sectional view taken along line Y-Y' of FIG. 10A showing the drawer side base part 92a and the drawer 2 accommodated therein. In FIG. 10B, to enhance understanding the drawing, the other elements except the rail engaging member 24 and the guide rail 94 are omitted or simplified.

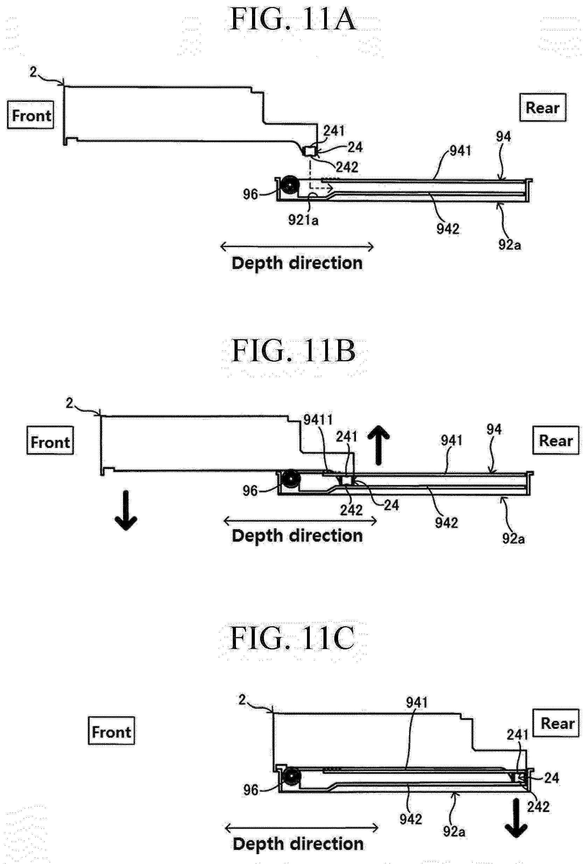

As shown in FIG. 10B, the guide rail 94 has a cross-section of a laid U shape and includes a ceiling part 941, a bottom part 942, and the wall part 943 connecting the ceiling part 941 and the bottom part 942. The pair of wall parts 943 are vertically extended and arranged opposite each other on the inner side of the lateral parts 243 of the rail engaging members 24 in the width direction. The ceiling part 941 is extended from the upper end of the wall part 943 toward the outer side in the width direction, facing the upper contact part 241 of the rail engaging member 24 from above. The bottom part 942 is a portion of a bottom panel 921 of the drawer side base part 92a extended from the lower end of the wall part 943 toward the outer side in the width direction. The bottom part 942 faces the lower contact part 242 of the rail engaging member 24 from below. As shown in FIG. 8A, the ceiling part 941 is not formed at the front portion of the guide rail 94. Further, at the front portion of the drawer side base part 92a, the bottom panel 921 has a step-down part 921a which is lowered by a step. The bottom part 942 of the guide rail 94 is not formed at the step-down part 921a. And, the ceiling part 941 has a strengthening rib 9411 at the front portion. The strengthening rib 9411 reinforces the front portion of the ceiling part 941 to support the weight of the drawer 2 when the drawer 2 is pulled out toward the front side (refer FIG. 11B). Further, as shown in FIG. 10B, a bottom wall 223 of the drawer 2 has a guide groove 2231. The guide groove 2231 is extended tin the depth direction. The drawer 2 is moved in the depth direction with the restrictor 95 (refer FIG. 8) being inserted in the guide groove 2231. The guide groove 2231 will be described later in detail.

FIG. 11A, FIG. 11B and FIG. 11C show the drawer and the drawer device to which the drawer is attached. The drawer 2, the rail engaging member 24, the drawer side base part 92a, the guide rail 94, and the guide roller 96 are illustrated in a simplified way.

To attach the drawer 2, as shown in FIG. 11A, the rail engaging member 24 is inserted into the guide rail 94 from the front portion thereof where the ceiling part 941 and the bottom part 942 are not formed. As shown in FIG. 11B, in a state right after the drawer 2 is inserted in the guide rail 94 (or when the drawer 2 is fully pulled out and opened), a counterclockwise rotational moment illustrated by arrows is generated on the drawer 2 with respect to the guide roller 96 as a pivot point. Therefore, the upper contact part 241 of the rail engaging member 24 is strongly brought into contact with the ceiling part 941 of the guide rail 94. A burden on the ceiling part 941 is heavier as the contact position is shifted nearer to the front portion thereof. However, since the front portion of the ceiling part 941 is reinforced by the strengthening rib 9411, the guide rail 94 is prevented from being broken. Hereinafter, the position of the drawer 2 illustrated in FIG. 11B will be referred as the opened position. When the drawer 2 is at the opened position, the lower contact part 242 of the rail engaging member 24 may not contact or slightly contact the bottom part 942 of the guide rail 94 according to the weight of the money accommodated in the drawer 2.

When the drawer 2 is pushed toward the enclosed position from the opened position, the rail engaging member 24 slides along the ceiling part 941 of the guide rail 94 to move toward the rear side. The counterclockwise rotational moment on the drawer 2 is gradually decreased, and clockwise moment is gradually increased instead. The clockwise moment illustrated by the arrow in FIG. 11C reaches the maximum when the drawer 2 reaches the enclosed position, where the lower contact part 242 of the rail engaging member 24 is strongly brought into contact with the bottom part 942 of the guide rail 94. Meanwhile, in pulling out the drawer 2 from the enclosed position shown in FIG. 11C, the drawer 2 is firstly moved to the opened position shown in FIG. 11B and, in the reverse way of the feature shown in FIG. 11A, the rail engaging member 24 is pulled out from the front portion of the guide rail 94 where the ceiling part 941 and the bottom part 942 are not formed.

As discussed above, coated grease is held in the grease trench 2411, 2421 and the grease channel 2412, 2422 of the upper contact part 241 and the lower contact part 242. Therefore, when the drawer 2 is moved, the upper contact part 241 smoothly slides along the ceiling part 941 and the lower contact part 242 smoothly slides along the bottom part 942.

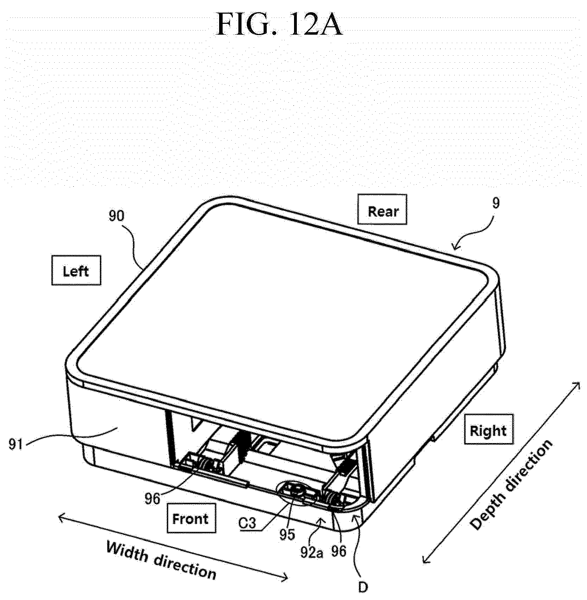

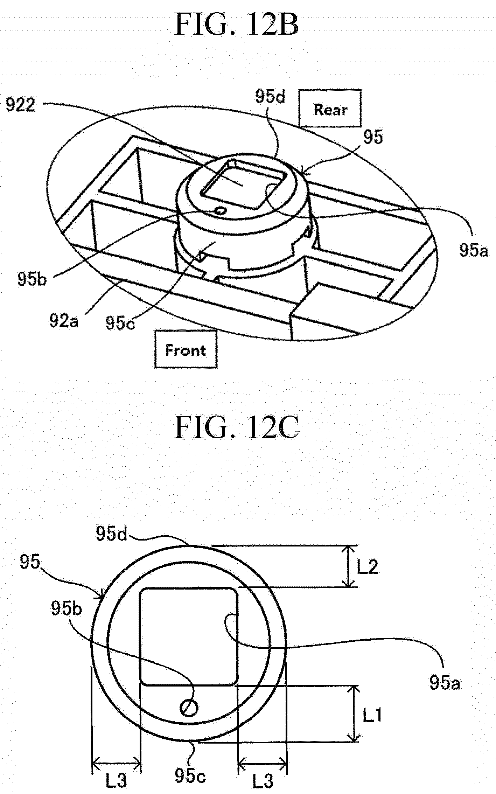

With reference to FIG. 12A, FIG. 12B and FIG. 12C, a structure of the restrictor 95 which restricts width direction position of the drawer 2 will be described. FIG. 12A is a perspective view of the printer-drawer integrated apparatus 9 shown from right-upper side, of which drawer 2 is removed. As shown in FIG. 12A, the restrictor 95 is disposed at the front portion of the drawer side base part 92a and between the pair of guide rollers 96

FIG. 12B is an enlarged view of the circle portion C3 of FIG. 12A, showing the restrictor 95 and its periphery. FIG. 12C is a plan view of the restrictor 95. As shown in FIG. 12B and FIG. 12C, the restrictor 95 has approximately a cylinder shape. When viewed from the top, the restrictor 95 has an insert hole 95a of approximately a square and a mark hole 95b of a small circle. As shown in FIG. 12B, a protrusion 922 of approximately a square column is disposed on the drawer side base part 92a and the restrictor 95 is mounted on the drawer side base part 92a by engagement of the insert hole 95a and the protrusion 922 . In FIG. 12B, the restrictor 95 is mounted on the protrusion 922 with the mark hole 95b directed to the front side. Hereinafter, the direction of the restrictor 95 shown in FIG. 12B will be called as the initial posture. The most front portion of the restrictor 95 in the initial posture (the front portion on the straight line passing the center of the restrictor 95 and the mark hole 95b) will be called as a reference point 95c and the opposite portion of the reference point 95c will be called as a counter reference point 95d. As shown in FIG. 12C, the insert hole 95a is not disposed at the center of the restrictor 95 in the direction connecting the reference point 95c and the counter reference point 95d but is disposed at a position where the distance L1 from the reference point 95c to the insert hole 95a is greater than the distance L2 from the counter reference point 95d to the insert hole 95a. Further, the insert hole 95a is disposed at the center of the restrictor 95 in the perpendicular direction to the direction connecting the reference point 95c and the counter reference point 95d. The distances L3 from the insert hole 95a to the far ends of the restrictor 95 in the perpendicular direction on both sides are the same. Therefore, L1 is the longest, L3 is the next longest and L2 is the shortest.

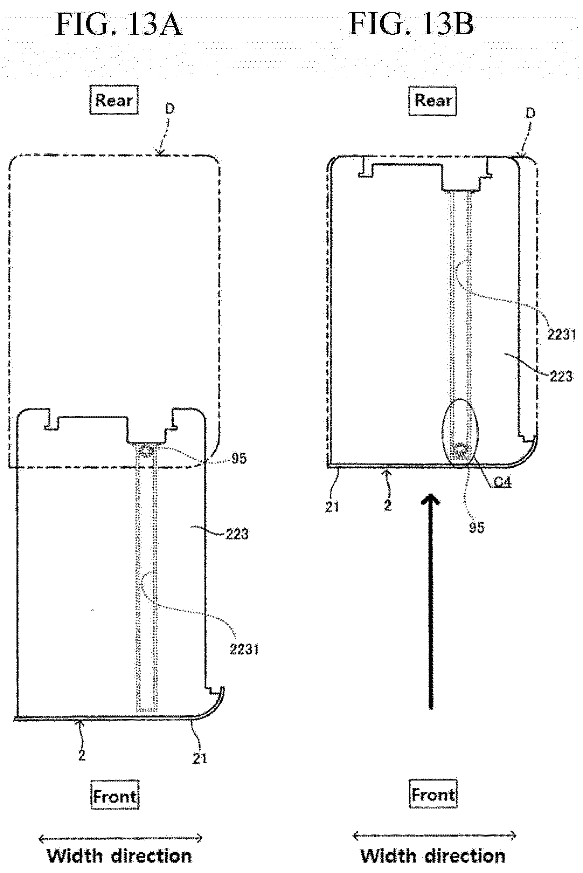

FIG. 13A and FIG. 13B are plan views showing movement of the drawer from the opened position to the enclosed position under restriction of the restrictor 95. FIG. 13A shows the drawer 2 at the opened position and FIG. 13B shows the drawer 2 at the enclosed position. In FIG. 13A and FIG. 13B, the contour of the cash drawer D is illustrated by the two point chain line and the restrictor 95 hidden under the drawer 2 is illustrated by the dotted line. Further, the contour of the drawer 2 is illustrated by the solid line and the guide groove 2231 formed under the bottom surface of the bottom wall 223 is illustrated by the dotted line.

As shown in FIG. 13A and 13B, the drawer 2 moves from the opened position to the enclosed position with the restrictor 95 inserted in the guide groove 2231. As discussed above, although the drawer 2 moves as the rail engaging member 24 slides on the guide rail 94, the position of the drawer 2 in the width direction is not restricted by the guide rail 94 but is restricted by the restrictor 95 inserted in the guide groove 2231. Further, the position of the drawer 2 in the width direction is restricted by the restrictor 95 regardless of whether the drawer 2 is at the opened position as shown in FIG. 13A or at the enclosed position as shown in FIG. 13B. Therefore, if the restrictor 95 is displaced to the right side, the drawer 2 in the opened position, during movement, or in the enclosed position is also displaced to the right side. On the contrary, if the restrictor 95 is displaced to the left side, the drawer 2 in the opened position, during movement, or in the enclosed position is also displaced to the left side.

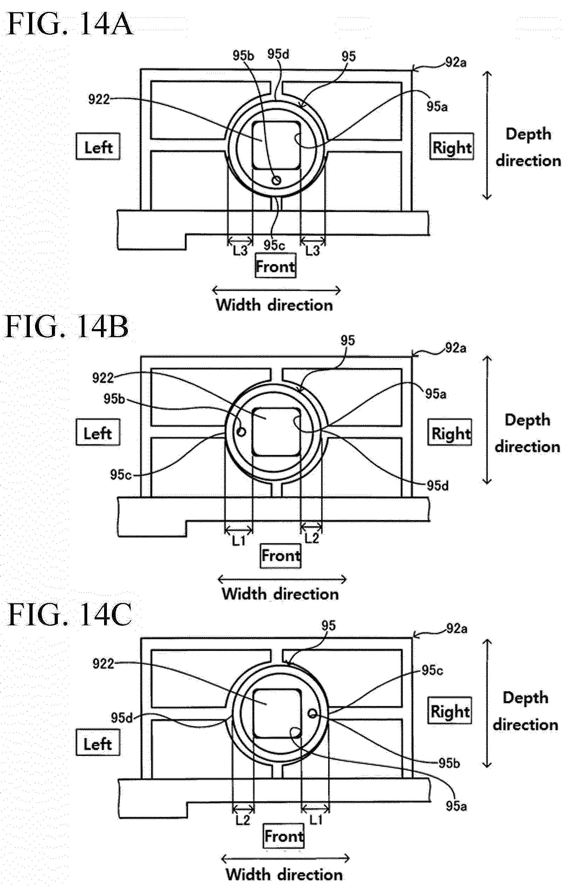

FIG. 14A, FIG. 14B and FIG. 14C are plan views showing direction change of the restrictor 95 mounted on the protrusion 922 to adjust the position of the drawer 2 in the width direction. In FIG. 14A, FIG. 14B and FIG. 14C, the lower side is the front side of the apparatus.

FIG. 14A is a top view of the restrictor 95 in the initial posture as shown in FIG. 12B. As discussed above, the restrictor 95 in the initial posture has the reference point 95c directed to the front side. Therefore, the distance from the protrusion 922 to the left end of the restrictor 95 is L3 and the distance from the protrusion 922 to the right end of the restrictor 95 is also L3. Accordingly, as shown in FIG. 13A and FIG. 13B, the protrusion 922 is disposed at the center of the guide groove 2231 in the width direction regardless of the position of the drawer 2.

As shown in FIG. 14B, if the restrictor 95 is mounted on the protrusion 922 with the reference point 95c directed to the left side, the distance from the protrusion 922 to the left end of the restrictor 95 is L1 and the distance from the protrusion 922 to the right end of the restrictor 95 is L2. Accordingly, the restrictor 95 is displaced to the left side by the difference between L1 and L3 with respect to the initial posture shown in FIG. 14A. As a result, the drawer 2 in the opened position, during movement, or in the enclosed position is displaced to the left side in the width direction as much as the restrictor 95 is displaced.

As shown in FIG. 14C, if the restrictor 95 is mounted on the protrusion 922 with the reference point 95c directed to the right side, the distance from the protrusion 922 to the right end of the restrictor 95 is L1 and the distance from the protrusion 922 to the left end of the restrictor 95 is L2. Accordingly, the restrictor 95 is displaced to the ught side by the difference between L1 and L3 with respect to the initial posture shown in FIG. 14A. As a result, the drawer 2 in the opened position, during movement, or in the enclosed position is displaced to the right side in the width direction as much as the restrictor 95 is displaced.

If the restrictor 95 is mounted on the protrusion 922 with the reference point 95c directed to the rear side, the position of the restrictor 95 in the width direction is not changed from the initial posture shown in FIG. 14A. Therefore, in the present embodiment, the position of the restrictor 95 in the width direction may be adjusted in the three states shown in FIG. 14A, FIG. 14B and FIG. 14C. As a result, the position of the drawer 2 in the width direction may also be adjusted in three steps in every position of the drawer 2 shown in FIG. 13A and FIG. 13B. Therefore, the gap between the printer cover 91 and the front panel 21 shown in FIG. 1 may be adjusted. Further, the protrusion 922 and the insert hole 95a may be formed to be a polygonal equal to or more than five-sided and the insert hole 95a may be displaced from the center of the restrictor 95, allowing adjustment of the position of the drawer 2 in the width direction in four or more steps.

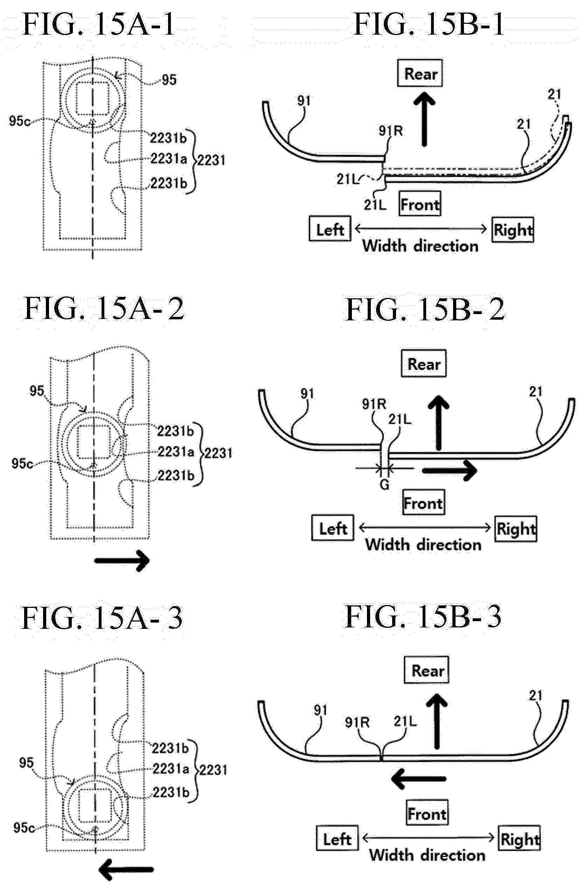

FIG. 15 totally shows movement of the drawer 2 toward the enclosed position. To illustrate the relation between the front panel 21 and the guide groove 2231 moving under the restriction of the restrictor 95, the left drawings of FIG 15 totally show the elliptical portion C4 of FIG 13B including the front part of the guide groove 2231 and the restrictor 95 in an enlarged manner, and the right drawings of FIG 15 totally show the printer cover 91 and the front panel 21 in a simplified manner. All drawings of FIG. 15 are top views and the lower side is the front side of the apparatus, thereby the left-right direction being the width direction.

As shown in FIG. 15A-1, the guide groove 2231 includes a curved portion 2231a bending in the width direction (to the left side in this embodiment) at right behind the front end thereof and front and rear straight portions 2231b extended in the depth direction interposing the curved portion 2231a therebetween. In FIG. 15 totally, to clearly illustrate the curved portion 2231a, the curvature of the curved portion 2231a is exaggerated. When the drawer 2 is pushed in from the opened position shown in FIG. 13A as shown in FIG. 15A-1, the straight portion 2231b slides under the restriction of the restrictor 95 until the curved portion 2231a reaches the restrictor 95. Therefore, as shown in FIG. 15B-1, the drawer 2 may be moved to the rear side with the left end 21L of the front panel 21 being approximately in line with the right end 91R of the printer cover 91 or with a tiny gap being maintained between the left end 21L of the front panel 21 and the right end 91R of the printer cover 91. Further, as shown in FIG. 15B-1 by the two point chain line, the drawer 2 may be moved to the rear side with the left end 21L of the front panel 21 overlapping the right end 91R of the printer cover 91 due to looseness between the restrictor 95 and the guide groove 2231, etc.

Then, as shown in FIG. 15A-2, when the curved portion 2231a reaches the restrictor 95, the guide groove 2231 is displaced to the right side. As a result, right before the drawer 2 reaching the enclosed position, as shown in FIG. 15B-2, the front panel 21 is also displaced to the right side. Therefore, a gap G is formed between the left end 21L of the front panel 21 and the right end 91R of the printer cover 91. This gap G is designed to be greater than the overlap width between the front panel 21 and the printer cover 91 when the aforementioned overlapping occurs. When the drawer 2 reaches the enclosed position, as shown in FIG. 15A-3, the straight portion 2231b is restricted by the restrictor 95 again. As a result, as shown in FIG. 15B-3, the front panel 21 returns to the left side with a tiny gap being kept between the left end 21L of the front panel 21 and the right end 91R of the printer cover 91. The gap may be adjusted in advance in accordance with the direction of the restrictor 95. When the drawer 2 is pulled out from the enclosed position, the drawer 2 is firstly moved from the state having a tiny gap between the left end 21L of the front panel 21 and the right end 91R of the printer cover 91 as shown in FIG. 15B-2 to the state having the gap G as shown in FIG. 15B-1. Then, when the drawer 2 is opened, the left end 21L of the front panel 21 returns approximately to be in line with the right end 91R of the printer cover 91.

The drawer 2 according to this embodiment is configured to form the gap G between the front panel 21 and the printer cover 91 right before reaching the enclosed position and right after leaving from the enclosed position. The front panel 21 is thereby avoided to accidentally touch the printer cover 91, even if the gap between the front panel 21 and the printer cover 91 in the enclosed position of the drawer 2 is set to be tiny.

As described above, in the cash drawer D according to the present embodiment, a user is prevented from unexpectedly touching the upper contact part 241 or the lower contact part 242 in attaching or detaching the drawer, thereby preventing the user's hands from getting dirty.

In the cash drawer D according to the present embodiment, a sliding surface such as the upper contact part 241 and the lower contact part 242 is provided as the contact part. However, a roller may be applied as the contact part. For example, rollers may be provided on both the upper end and the lower end of the rail engaging member 24 to contact the ceiling part 941 or the bottom part 942 of the guide rail 94. Further, in the cash drawer D according to the present embodiment, the pair of guide rails 94 are provided corresponding to the pair of rail engaging members 24. However, a single guide rail 94, for example a guide rail having H shaped cross-section, having the ceiling part 941 and the bottom part 942 integrally formed to correspond to the pair of rail engaging members 24 may be applied.

In the above description, in the described drawer device, the guide rail is extended in the depth direction perpendicular to the width direction and the drawer is moved along the guide rail. The drawer has the pair of rail engaging members arranged opposite each other directed inward in the width direction. Each of the rail engaging members has the contact part for contacting the guide rail.

Further, the contact part is explained to have the grease holder for keeping the grease.

Further, the contact part is explained to be disposed at a position higher than the lowest portion of the drawer.

From now, the other feature of the cash drawer D according to the present embodiment will be described, specifically the feature of locking and unlocking the drawer 2 without performing position control or motor shutdown control.

FIG. 16 is an exploded view of the printer-drawer integrated apparatus 9 shown in FIG. 1. In FIG. 16, the printer P mounted on the base part 90a of the housing 90 is also illustrated. FIG. 16 is a view of the printer-drawer integrated apparatus 9 slantledy shown from the right-rear side. In FIG. 16, the left-upper side is the front side of the apparatus and the right-lower side is the rear side of the apparatus.

As shown in FIG. 16, the cash drawer D has the drawer 2 and the lock unit 3 which is an example of the drawer mechanism. As described above, the drawer 2 is provided with the left and right rail engaging members 24 at the rear side end portion. The base part 90a includes the printer side base part 91a and the drawer side base part 92a. On the drawer side base part 92a, the left and right guide rails 94 corresponding to the rail engaging members 24 are disposed. In FIG. 16, the drawer 2 is advanced toward the left-upper side and reversely moved to be enclosed in the housing 90 as shown in FIG. 1 with the rail engaging members 24 being guided by the guide rails 94. Further, the drawer 2 has an attaching part 27 on which a stopper frame 25 is fixed at the rear portion. In FIG. 16, an enlarged view of the attaching part 27 is illustrated in the rectangle and an enlarged view of the stopper frame 25 is illustrated in the circle. On the attaching part 27, a pair of bosses 27a are upwardly protruded. And, the attaching part 27 has a cut 27b at the right end. The stopper frame 25 has a fixed part 251 extended in the left-right direction and an engaging part 252 vertically descending from the right end of the fixed part 251. The fixed part 251 has a pair of through holes 251a in which the pair of bosses 27a are respectively inserted and the engaging part 252 has an engaging hole 252a of an approximately rectangled opening. The fixed part 251 of the stopper frame 25 is placed on the attaching part 27 with the bosses 27a being inserted in the pair of through holes 251a and the engaging part 252 is inserted in the cut 27b to project downward. In this state, screws 26 are tightened to the pair of bosses 27a respectively, and thereby the stopper frame 25 is fixed to the attaching part 27. As described later, a lock frame 7 (refer FIG. 17) is engaged with the engaging part 252.

In the rear end portion of the drawer side base part 92a, a compressing coil spring 923 attached to the rear end thereof is extended in the front-rear direction. In the rear end portion of the drawer side base part 92a, a receiving part 924 is formed to accommodate the lock unit 3. At the enclosed position, the drawer 2 is urged toward the advancing direction (toward the front side) by the compressing coil spring 923 while the lock frame 7 (refer FIG. 17, etc.) of the lock unit 3 is engaged with the stopper frame 25 to anchor the drawer 2 at the enclosed position.

With reference to FIG. 17A, FIG. 17B, FIG. 17C and FIG. 18, the lock unit 3 will be described in detail. FIG. 17A is a plan view of the lock unit 3 shown in FIG. 16. FIG. 17B and FIG. 17C are perspective views of the lock unit 3 shown in FIG. 17A. FIG 17B shows the lock unit 3 viewed from the right-rear side and FIG. 17C shows the lock unit 3 viewed from the left-front side. FIG. 17A, FIG. 17B and FIG. 17C show the state that the lock frame 7 is engaged with the engaging part 252 of the stopper frame 25. FIG. 18 is an exploded view of the lock unit 3 shown in FIG. 17A. In FIG. 18, a base frame 4 is exploded in that a ceiling plate 41 is separated from a bottom plate 43 and a side plate 42 is omitted. Further, FIG. 18 also shows the stopper frame 25.

As shown in FIG. 17A, FIG. 17B, FIG. 17C and FIG. 18, the lock unit 3 is provided with the base frame 4, a hook gear 5, a planetary gear unit 6, the lock frame 7, a DC motor 81, and a tension coil spring 82. A worm gear 811 is engaged in the output shaft of the DC motor 81.

The base frame 4 includes the bottom plate 43 having an approximately rectangled outline, the ceiling plate 41 having a smaller left-right dimension than the bottom plate 43 and the side plate 42, as shown in FIG. 17B and FIG. 17C, connecting the left end of the bottom plate 43 and the left end of the ceiling plate 41. As shown in FIG. 18, the bottom plate 43 has through holes 43a and 43b and a cut portion 43c cut in from the rear end. As shown in FIG. 17A, FIG. 17B, FIG. 17C and FIG. 18, the bottom plate 43 is provided with a second stopper 431 extended upward from the front end and a motor mounting piece 432. The second stopper 431 terminates the rotation of the planetary gear unit 6 which will be described later. On the motor mounting piece 432, the DC motor 81 is mounted.

As shown in FIG. 18, the ceiling plate 41 has through holes 41a and 41b respectively corresponding to the through holes 43a and 43b of the bottom plate 43 in the upper-lower direction. Further, as shown in FIG. 17A, FIG. 17B, FIG. 17C and FIG. 18, the ceiling plate 41 has a cut portion 41c cut in from the front end and is provided with a first stopper 411 extended downward. The cut portion 41c is formed to avoid interference with the engaging part 252 in the locked state. The first stopper 411 terminates the rotation of the lock frame 7 which will be described later.

As shown in FIG. 17A, FIG. 17B, FIG. 17C, the hook gear 5, the planetary gear unit 6 and the lock frame 7 are arranged in the space surrounded by the bottom plate 43, the side plate 42 and the ceiling plate 41.

As shown in FIG. 18, the hook gear 5 has a shaft member 51 extended in the upper-lower direction and a hook gear main body 52. The hook gear main body 52 has a hook member 521, a gear part 522 having a plurality of gear sawteeth (five in this embodiment) arranged in a circular art shape, a protrusion 523 to which an end 821 of the tension coil spring 82 is connected, and a guide part 524 inserted into the cut portion 43c of the bottom plate 43 with the front end thereof being positioned below the bottom plate 43. The shaft member 51 is inserted in the through hole 43a of the bottom plate 43 and the through hole 41a of the ceiling plate 41. And, as shown in FIG. 17A, FIG. 17B, FIG. 17C, a C type stop washer 83 is mounted on the portion of the shaft member 51 protruded over the ceiling plate 41. Accordingly, the hook gear main body 52 is rotatably mounted on the base frame 4 on the shaft member 51 as a rotation axis. The hook gear 5 is an example of an engaging member and the hook member 521 of the hook gear 5 is an example of an engaging part.

As shown in FIG. 17C, a shaft 85 is extended between the ceiling plate 41 and the bottom plate 43 in the upper-lower direction. The shaft 85 has the lower end inserted in the planetary gear unit 6 and the upper end inserted in the lock frame 7. The shaft 85 is tightened to the ceiling plate 41 by a screw 84 from above and the bottom plate 43 by a screw (not shown) from below. As a result, the lock frame 7, the shaft 85 and the planetary gear unit 6 are mounted between the ceiling plate 41 and the bottom plate 43

As shown in FIG. 18, the planetary gear unit 6 has a base member 63, two stage sun gear 61, and two stage planetary gear 62. The base member 63 has a through hole in which the shaft 85 is inserted. The shaft 85 penetrates the two stage sun gear 61 and the through hole of the base member 63. The base member 63 has a contact piece 631 directly contacting the lock frame 7. The two stage sun gear 61 has a driving gear 612 having a small diameter and a worm wheel 611 disposed on the driving gear 612 and having a large diameter. A C type stop washer 86 is mounted on the upper end of the worm wheel 611. Accordingly, the two stage sun gear 61 and the base member 63 are rotatably mounted on the base frame 4 on the shaft 85 as a rotation axis.

The two stage planetary gear 62 has a large planetary gear 621 having a larger diameter and a small planetary gear 622 disposed on the large planetary gear 621 and having a smaller diameter. The two stage planetary gear 62 is rotatably mounted on the base member 63 on a pin 87 as a rotation axis. Further, a spring (not shown) is mounted between the two stage planetary gear 62 and the base member 63. A C type stop washer 88 is mounted on the two stage planetary gear 62 with the spring being compressed. Accordingly, when the two stage planetary gear 62 is rotated on the pin 87 as the rotation axis, a friction force with respect to the spring is generated, thereby a certain torque for rotating the planetary gear unit 6 and the base member 63 on the shaft 85 as the rotation axis being generated. Further, the two stage planetary gear 62 revolves around the shaft 85. In other words, the two stage planetary gear 62 rotates on the pin 87 as the rotation axis and revolves around the shaft 85.

As shown in FIG. 17B, the worm wheel 611 of the two stage sun gear 61 is engaged with the worm gear 811 of the DC motor 81, thereby torque of the DC motor 81 being transferred to the two stage sun gear. As shown in FIG. 18, the driving gear 612 of the two stage sun gear 61 is engaged with the large planetary gear 621 of the two stage planetary gear 62, thereby torque of the DC motor 81 being transferred to the large planetary gear 621. As described above, when the two stage planetary gear 62 is rotated, a friction force with respect to the spring is generated, causing the two stage planetary gear 62 to make a revolution around the shaft 85 without rotating with respect to the pin 87. Simultaneously, the base member 63 is thereby rotated, causing the small planetary gear 622 to be engaged with the gear part 522 of the hook gear 5 (refer FIG. 19A-2). When the small planetary gear 622 is engaged with the gear part 522 of the hook gear 5 (engaged state), the torque of the DC motor 81 is transferred to the small planetary gear 622 to rotate the small planetary gear 622 on the pin 87 as the rotation axis. As a result, the hook gear 5 is rotated with respect to the shaft member 51 by the transferred torque from the DC motor 81. In other words, the small planetary gear 622 is an example of a transmission gear and the planetary gear unit 6 is an example of a transmission member.

The lock frame 7 is a thin plate having, as shown in FIG. 18, a through hole 7a in which an upper end 85a of the shaft 85 is inserted. The lock frame 7 is rotated on the shaft 85 as a rotation axis and has a lock part 71 to be engaged with the hook member 521 of the hook gear 5 in the locked state (refer FIG. 19B-1) and an anchoring part 72 to be engaged with the engaging part 252 of the stopper frame 25, as shown in FIG. 17A and FIG. 17B, in the locked state. FIG. 18 shows the posture of the lock frame 7 in the locked state. The anchoring part 72 has an anchoring surface 72a approximately parallel to the left-right direction in the locked state. As shown in FIG. 17A, in the locked state, the anchoring surface 72a is hooked in the engaging hole 252a of the engaging member 252. Thereby, as shown in FIG. 1, the drawer 2 is anchored at the enclosed position.

In this embodiment, as described above with reference to FIG. 1, the front surface of the printer cover 91 and the front surface of the front panel 21 are arranged to be placed on the same plane. This feature will be described with reference to FIG. 18. FIG. 18 shows the stopper frame 25 and the bosses 27a of the attaching part 27 (refer FIG. 16) to fix the stopper frame 25. The stopper frame 25 disposed at the rearmost position is illustrated in the solid line and the stopper frame 25 disposed at the front most position is illustrated in the two point chain line. As illustrated by the both sided arrow in FIG. 18, each of the through holes 251a of the stopper frame 25 has the shape of an elongated circle extended in a direction slanted to the front-rear direction. Therefore, if the stopper frame 25 is fastened by the screw 26 (refer FIG. 16) with the bosses 27a being positioned at the front most of the through holes 251a (the left-lower side in the drawing), the stopper frame 25 is placed at the rearmost position. On the contrary, if the stopper frame 25 is fastened by the screw 26 (refer FIG. 16) with the bosses 27a being positioned at the rearmost of the through holes 251a (the right-upper side in the drawing), the stopper frame 25 is placed at the front most position. Therefore, the position of the stopper frame 25 may be adjusted within the range C from the rearmost position to the front most position.

As shown in FIG. 17A, the anchoring surface 72a of the lock frame 7 is approximately parallel to the left-right direction in the locked state. Therefore, by adjusting the position of the stopper frame 25 engaged with the anchoring surface 72a in the front-rear direction, the front-rear direction position of the front panel 21 of the drawer 2 may be adjusted. Accordingly, the front surface of the printer cover 91 and the front surface of the front panel 21 may be adjusted to be placed on the same plane. The through holes 251a may be formed to be an elongated hole extended in the front-rear direction. However, if the through hole 251a is extended in the front-rear direction, the fastening by the screw 26 may be easily loosened when a force toward the front side is applied on the drawer 2. Thereby, the lock frame 7 may be unexpectedly moved and the locked state of the drawer 2 may be unstable. As described in this embodiment, by forming the through holes 251a to extend in a direction slanted to the front-rear direction, the fastening by the screw 26 is prevented from being loosened when a force toward the front side is applied on the drawer 2.

Further, the lock frame 7 has a mounting piece 74 curved toward the lower side and a contacting part 73 brought into contact with the first stopper 411 of the ceiling plate 41 when the lock frame 7 is rotated in the counterclockwise direction. To the mounting piece 74, an end 822 of the tension coil spring 82 is connected. The tension coil spring 82 has the end 821 connected to the protrusion 523 of the hook gear 5 and the other end 822 connected to the mounting piece 74 of the lock frame 7 (refer FIG. 19B-1, etc.). By the tension coil spring 82, the hook gear 5 and the lock frame 7 are commonly urged in the counterclockwise direction. The tension coil spring 82 is set to have a tension force greater than the force generated by the rotation of the DC motor 81 to revolve the two stage planetary gear 62. In the locked state, the lock part 71 is urged toward the planetary gear unit 6.

FIG. 19 totally shows an unlocking procedure of the lock unit 3 in the locked state shown in FIG. 17A in a step by step manner and FIG. 20 totally shows the unlocking procedure of the lock unit continued from FIG. 19. FIG. 19A-1, FIG. 19A-2, FIG. 19A-3, FIG. 20A-4, and FIG. 20A-5 show the operation of the hook gear 5 and the planetary gear unit 6 without showing the ceiling plate 41, the lock frame 7 and the tension coil spring 82. FIG. 19B-1, FIG. 19B-2, FIG. 19B-3, FIG. 20B-4, and FIG. 20B-5 additionally show the lock frame 7, the tension coil spring 82 and the engaging part 252 of the stopper frame, showing the operation of the hook gear 5, the lock frame 7 and the engaging part 252 . FIG. 20C-5 additionally shows the ceiling plate 41 and the lock frame 7 directly contacting the ceiling plate 41.

FIG. 19A-1 and FIG. 19B-1 show the lock unit 3 in the locked state as shown in FIG. 17A. The planetary gear unit 6 is in the initial state. As shown in FIG. 19A-1, the planetary gear unit 6 in the initial state has the base member 63 contacting the second stopper 431 of the bottom plate 43 and the small planetary gear 622 separated from the gear part 522 of the hook gear 5. Further, as shown in FIG. 19B-1, in the locked state, while the hook member 521 of the hook gear 5 is hooked on the lock part 71 of the lock frame 7, due to the tension coil spring 82, the hook gear 5 is urged in the counterclockwise direction with respect to the rotation axis of the shaft member 51 and the lock frame 7 is urged in the counterclockwise direction with respect to the rotation axis of the shaft 85. Thereby, the hook member 521 and the lock part 71 are urged toward each other and their hooked state is maintained. Further, in the hooked state in which the hook member 521 is hooked on the lock part 71, the anchoring surface 72a of the anchoring part 72 is maintained approximately parallel to the left-right direction. As described with reference to FIG. 16, the drawer 2 is urged toward the front side (advancing direction) by the compressing coil spring 923 and the engaging part 252 of the drawer 2 is hooked to the anchoring surface 72a of the anchoring part 72. Thereby, the drawer 2 is anchored at the enclosed position while urged toward the front side (advancing direction).

For example, when the cutting device of the printer cuts the paper to complete one payment, the drawer kick signal is output from the printer or the POS terminal to the cash drawer D via a driving circuit for driving the cash drawer D. When the drawer kick signal is output, electric power is supplied to the DC motor 81 for 0.5 second to 1.0 second. The DC motor 81 is thereby driven to transfer a torque to the two stage sun gear 61. The DC motor 81 rotates in one direction. When the torque of the DC motor 81 is transferred to the two stage sun gear 6, as shown in FIG. 19A-2, the two stage sun gear 61 is rotated in the clockwise direction, and thereby the two stage planetary gear 62 is rotated in the clockwise direction around the shaft 85. As a result, the small planetary gear 622 is engaged with the gear part 522 of the hook gear 5 and the planetary gear unit 6 is brought into the engaged state. And, while the planetary gear unit 6 is brought into the engaged state, as shown in FIG. 19B-2, the hook gear 5 and the lock frame 7 are still maintained in the locked state.

In the engaged state, when the torque of the DC motor 81 is transferred to the two stage planetary gear 62 via the two stage sun gear 61, as shown in FIG. 19A-3, the two stage planetary gear 62 is rotated on the pin 87 as the rotation axis in the counterclockwise direction and the hook gear 5 of which gear part 522 is engaged with the small planetary gear 622 is rotated in the clockwise direction. When the hook gear 5 is rotated in the clockwise direction, as shown in FIG. 19B-3, the hook member 521 is unhooked from the lock part 71 of the lock frame 7. Upon unhooking, the lock frame 7 is rotated in the counterclockwise direction by the urging force toward the counterclockwise direction on the lock frame 7 applied by the tension coil spring 82 and the urging force on the anchoring part 72 applied by the engaging part 252 when the drawer is advanced by the urging force of the compressing coil spring 923.

When the lock frame 7 is rotated in the counterclockwise direction, as shown in FIG. 20B-4, engagement of the anchoring part 72 and the engaging part 252 is released, and the drawer 2 is thereby advanced from the enclosed position (refer FIG. 16), and the lock part 71 is brought into contact with the contact piece 631 of the planetary gear unit 6. As shown in FIG. 20A-4, while the engaged state between the small planetary gear 622 and the gear part 522 of the hook gear 5 is maintained, the hook gear 5 is continuously rotated in the clockwise direction.

The lock frame 7 contacting the contact piece 631 of the planetary gear unit 6 is further rotated in the counterclockwise direction. Thereby, as shown in FIG. 20B-5, the planetary gear unit 6 is pressed by the lock frame 7 and also rotated in the counterclockwise direction along with the lock frame 7. The rotation of the planetary gear unit 6 is stopped when the base member 63 contacts the second stopper 431. The rotation of the lock frame 7, as shown in FIG. 20C-5, is stopped when the contacting part 73 meets the first stopper 411 of the ceiling plate 41. If the apparatus is designed in that the rotation of the lock frame 7 is stopped by the planetary gear unit 6 contacting the second stopper 431 of the base member 63, the first stopper 411 of the ceiling plate 41 may be omitted. As shown in FIG. 20A-5, as the planetary gear unit 6 is pressed by the lock frame 7 to make a counterclockwise rotation, the small planetary gear 622 is driven to make a revolution in the counterclockwise direction. As a result, the planetary gear unit 6 is brought into the initial state where the small planetary gear 622 is separated from the gear part 522 of the hook gear 5. Further, as described above, since the lock frame 7 is urged by a force greater than the force making the revolution of the two stage planetary gear 62, the two stage planetary gear 62 in the disengaged state is not able to move from the initial state where it is separated from the gear part 522. As a result, even if the DC motor 81 is continuously driven, the two stage planetary gear 62 is merely rotated with respect to the axis of the pin 87 but the torque of the DC motor 81 is not transferred to the hook gear 5. Therefore, the DC motor 81 is not needed to be stopped. Further, under the engaged state, the DC motor 81 is rotated in one direction, thereby engagement of the hook member 521 and the lock part 71 being released. Therefore, it is not needed to control the position of the hook member 521 and the lock part 71 even when the hook member 521 and the lock part 71 are disengaged. In other words, there is no need for position control of the hook member 521 and the lock part 71 using sensors.

Further, as shown in FIG. 20B-5 and FIG. 20C-5, the lock frame 7 is stopped in a posture to receive the engaging part 252 of the drawer 2 when the drawer 2 advanced out from the enclosed position is pushed back to the enclosed position. In detail, the anchoring part 72 is retracted not to contact the engaging part 252 pushed back to the enclosed position. The state of the lock frame 7 shown in FIG. 20B-5 and FIG. 20C-5 is the initial state of the lock frame 7.

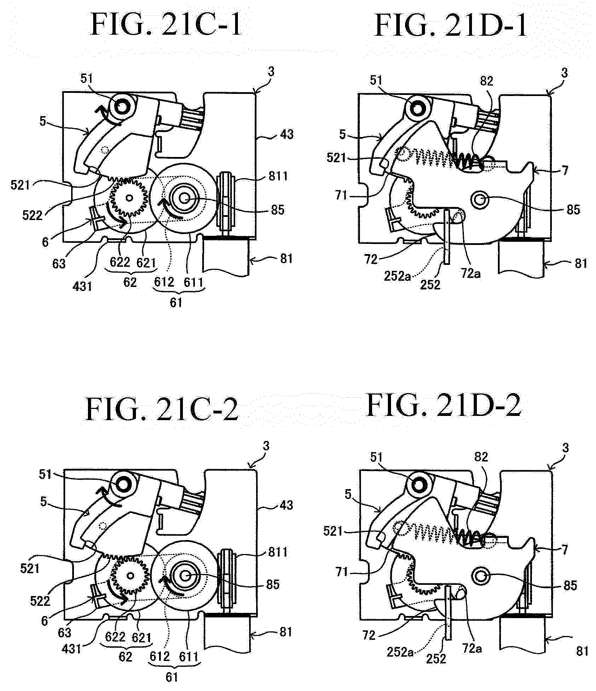

FIG. 21 shows a state of the lock unit 3 shown in FIG. 19A-1 and FIG. 19B-1, in which a drawer kick signal is output when the drawer is physically blocked from advancing by a key or a user.. In FIG. 21C-1, and FIG. 21C-2, the ceiling plate 41, the lock frame 7 and the tension coil spring 82 are omitted and operation of the hook gear 5 and the planetary gear unit 6 is illustrated. Further, in FIG. 21D-1 and FIG. 21D-2, the lock frame 7, the tension coil spring 82, and the engaging part 252 of the stopper frame 25 are additionally illustrated and operation of the hook gear 5, the lock frame 7 and the engaging part 252 is illustrated.

When a drawer kick signal is output while the drawer is in the locked state as shown in FIG. 19A-1 and FIG. 19B-1 where the drawer is blocked from advancing, as shown in FIG. 21C-1, the DC motor 81 is driven to rotate the hook gear 5 in the counterclockwise direction. Accordingly, as shown in FIG. 21D-1, the hook member 521 is unhooked from the lock part 71 but since the drawer stays at the enclosed position, the engaging part 252 does not move. Therefore, the engaging part 252 prevents the lock frame 7 from moving and the engagement between the small planetary gear 622 and the gear part 522 is maintained.

In the present embodiment, since the gear part 522 has a limited number of sawteeth (for example, 5), if the DC motor 81 is continuously driven to rotate the hook gear 5, as shown in FIG. 21C-2, the small planetary gear 622 is disengaged from the gear part 552. As a result, the small planetary gear 622 becomes idling and is stopped when the supplying of electric power for 0.5 second to 0.1 second corresponding to the drawer kick signal is ended. Continued engagement of the small planetary gear 622 and the gear part 552 beyond the rotatable range of the hook gear 5 possibly causes the DC motor 81 to be locked. In the present embodiment, the gear part 552 is designed to have the limited number of sawteeth to disengage the small planetary gear 622 from the gear part 552 within the rotatable range of the hook gear 5, thereby the DC motor 81 being avoided from being locked. The limited number of the sawteeth of the gear part 552 may be set in accordance with the rotatable range of the hook gear 5 or the electric power supplying time, etc. When the drawer 2 is unlocked from the state shown in FIG. 21C-2 and FIG. 21D-2, the drawer 2 is advanced by the urging force of the compressing coil spring 923 (refer FIG. 16) in the advancing direction.

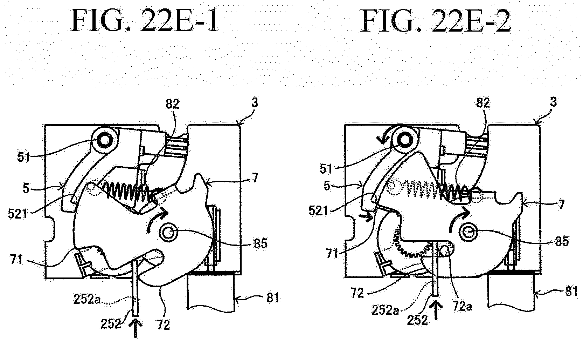

FIG. 22 totally shows a returning procedure of the lock unit 3 from the state shown in FIG. 20B-5 in which the lock frame 7 is at an initial position to the state shown in FIG. 19B-1 in which the lock unit 3 is locked by pushing the drawer 2 back to the enclosed position. FIG. 22E-1 and FIG. 22E-2 show operation of the hook gear 5, the lock frame 7 and the engaging part 252 without showing the ceiling plate 41 in the same manner as FIG. 19B and FIG. 20B.

When the drawer 2 is pushed back to the enclosed position, the lock frame 7 in the initial state as shown FIG. 20B-5 is pressed by the engaging part 252 of the drawer 2, thereby being rotated in the clockwise direction as shown in FIG. 22E-1.

When the drawer 2 reaches the enclosed position, as shown in FIG. 22E-2, the anchoring part 72 of the lock frame 7 enters in the engaging hole 252a of the engaging part 252, thereby the engaging part 252 of the drawer 2 is brought into engagement with the anchoring part 72 of the lock frame 7. Further, the lock part 71 of the lock frame 7 is rotated beyond the position of the hook member 521 of the hook gear 5 and the hook gear 5 is rotated in the counterclockwise direction by the force of the tension coil spring 82. As a result, the lock unit 3 is brought into the locked state as shown in FIG. 19B-1. Even if the hook member 521 is hooked to the lock part 71, neither the hook member 521 nor the lock part 71 is required to be positionally controlled. In the present embodiment, the lock frame 7 rotated upon disengagement is stopped in the initial state receiving the engaging part 252 of the drawer 2 returned to the enclosed position. Therefore, the present invention eliminates the need for controlling reverse rotation of the motor, position control using sensors or motor shutdown control to move the lock frame 7 into the initial state.

In the cash drawer D according to the present embodiment, the drawer 2 can be locked and unlocked without any position control or motor shutdown control eliminating the need for sensors or control board. The cost of the apparatus is thereby decreased and further, errors due to the operator's mistake are reduced.

In the present embodiment, the planetary gear unit 6 is pressed by the lock part 71 of the lock frame 7 but the planetary gear unit 6 may be pressed by the other part of the lock frame 7 to change the planetary gear unit 6 from the engaged state to the initial state. Further, in the present embodiment, both the hook gear 5 and the lock frame 7 are commonly urged by the single tension coil spring 82 but the hook gear 5 and the lock frame 7 may be designed to be urged by different urging members. Meanwhile, when the apparatus is designed in that both the hook gear 5 and the lock frame 7 are commonly urged by the single tension coil spring 82, the number of components for the apparatus may be reduced.

In the above description, the drawer apparatus comprises the drawer urged toward the advancing direction at the enclosed position, the engaging member having the engaging part and the gear part, the motor, the transmission member changed from the initial state to the engaged state by the torque of the motor with the transmission gear thereof disengaged from the gear part in the initial state and engaged therewith in the engaged state for rotation, and the locking member having the lock part hooked to the engaging member in the locked state and the anchoring part engaged with the drawer to anchor the drawer at the enclosed position in the locked state. The locking member is released from the engaged state by the rotation of the motor in one direction, thereby being operated. The drawer is released from the anchoring part by the operation of the locking member, thereby being advanced from the enclosed position. The transmission member is pressed by the locking member and the transmission gear is thereby changed from the engaged state to the initial state. The anchoring part is engaged with the drawer pushed back to the enclosed position. The engaging member is hooked to the lock part when the drawer advanced from the enclosed position is pushed back to the enclosed position.

Further, the locking member is urged in the direction to bring the lock part closer to the transmission member in the locked state and is operated when the engaged state is released.

Further, the locking member, in the disengaged state, presses the transmission member to separate the transmission gear from the gear part with a force greater than the force supplied by the rotation of the motor to change the transmission member from the initial state to the engaged state.

Further, the transmission gear is a planetary gear.

Further, the gear part is disengaged from the transmission gear when the transmission gear is rotated in a direction in the engaged state.

Further, the lock part is moved toward the transmission member by rotation.

Further, an urging member which urges the lock part toward the transmission member in the locked state is provided.

Further, the urging member also has a function of urging the engaging member toward the lock part in the locked state.

Until now, an embodiment of the cash drawer D is described in detail. However, the present invention is not limited to the cash drawer D described in here. It will be apparent to those skilled in the art that various modifications and variations can be made in the present invention without departing from the scope or spirit of the invention. Thus, it is intended that the present invention cover the modifications and variations of this invention provided that they come within the scope of the appended claims or their equivalents.

## Claims

1. A printer-drawer integrated apparatus comprising:
a drawer having a money storage unit and being enclosed in a housing in a state disallowing money to be taken in and out from the money storage unit;
a drawer mechanism configured to change the drawer into a state allowing money to be taken in and out from the money storage unit;
a terminal communication unit configured to receive a transaction information transmitted from a terminal device having an accounting function;
a printer housed in the housing; and
a controller configured to control the printer to execute a printing in accordance with the transaction information received by the terminal communication unit.

2. The printer-drawer integrated apparatus of claim 1, further comprising a transmission unit which transmits an information to a server, the information being based on the transaction information received by the terminal communication unit.

3. The printer-drawer integrated apparatus of claims 1 or 2, further comprising an interface for connecting an external device.

4. The printer-drawer integrated apparatus of claim 3, wherein the controller is configured to receive an external information from the external device connected to the interface and the terminal communication unit is configured to transmit the external information received by the controller to the terminal device.

5. The printer-drawer integrated apparatus of claims 3 or 4, wherein the controller is configured to have a control driver for the external device preinstalled therein.

6. A POS system comprising:
a terminal device configured to have an accounting function and transmit a transaction information;
a drawer having a money storage unit and being enclosed in a housing in a state disallowing money to be taken in and out from the money storage unit;
a drawer mechanism configured to change the drawer into a state allowing money to be taken in and out from the money storage unit;
a terminal communication unit configured to receive the transaction information transmitted from the terminal device;
a printer housed in the housing; and
a controller configured to control the printer to execute a printing in accordance with the transaction information received by the terminal communication unit,
wherein the terminal device is a versatile device separated from the housing.
